# EUROPEAN PATENT APPLICATION

(11) **EP 4 618 626 A1**
(43) Date of publication of application: **17.09.2025**
(21) Application number: 23887776.5
(22) Date of filing: 26.10.2023
(51) Int. Cl.: H04W 36/18

(54) **DATA TRANSMISSION METHOD AND APPARATUS, TERMINAL, AND NETWORK DEVICE**

(30) Priority: 11.11.2022 CN 202211414751
(71) Applicant: Datang Mobile Communications Equipment Co., Ltd., Beijing 100085 (CN)
(72) Inventor: ZHAO, Yali, Beijing 100085 (CN); LIANG, Jing, Beijing 100085 (CN); ZENG, Erlin, Beijing 100085 (CN)
(74) Representative: Studio Torta S.p.A.
(86) International application number: PCT/CN2023/126678
(87) International publication number: WO 2024/099085

(57) **Abstract**

The present disclosure provides a data transmission method and apparatus, a terminal, and a network device. The method is executed by the terminal and comprises: determining transmission path information; and according to the transmission path information, determining the format of a media access control (MAC) protocol data unit (PDU) of an MAC layer and/or the scrambling mode of a transmission block TB.

## Description

### CROSS-REFERENCE TO RELATED APPLICATION

This application claims the priority of Chinese Patent Application No. 202211414751.9 entitled "Data Transmission Method, Apparatus, Terminal, and Network Device" filed on November 11, 2022, the disclosure of which are hereby incorporated by reference in their entirety.

### TECHNICAL FIELD

The present disclosure relates to the field of communications technologies, and in particular, to a data transmission method and apparatus, a terminal, and a network device.

### BACKGROUND

Currently, there are mainly two transmission paths between two terminals in a network: data transmission performed through a cellular network (Uu link), and data transmission performed through a direct communication interface (also referred to as a PC5 interface or a sidelink (SL) interface). At present, there is no technical solution for how to ensure normal transmission of a data packet in case of a change in a transmission path to ensure service continuity.

### SUMMARY

Embodiments of the present disclosure provide a data transmission method and apparatus, a terminal, and a network device, to resolve a problem that switching of transmission paths affects service continuity.

To resolve the foregoing technical problem, an embodiment of the present disclosure provides a data transmission method performed by a terminal, the method includes:
determining transmission path information;
determining a format of a Media Access Control (MAC) Protocol Data Unit (PDU) of a MAC layer and/or a scrambling mode of a Transmission Block (TB) according to the transmission path information.

Optionally, the method further includes: receiving a first message from a network device, wherein the first message at least carries transmission path information corresponding to the terminal.

Optionally, the transmission path information includes one of the following:
a transmission path type; a transmission path type corresponding to a first bearer or a first logical channel; a transmission path type corresponding to a specific object; a transmission path type of a first bearer or a first logical channel corresponding to a specific object; a radio network temporary identifier (RNTI) type monitored by the terminal;
wherein the transmission path type includes: a Uu link or a sidelink;
the RNTI type includes an RNTI for scheduling a sidelink interface resource or an RNTI for scheduling a Uu interface resource;
the specific object includes one of the following:
   a target layer-2 address; a combination of a source layer-2 address and a target layer-2 address; a combination of a source layer-2 address, a target layer-2 address, and a transmission type.

Optionally, determining the format of the MAC PDU of the MAC layer according to the transmission path information includes at least one of the following:
when the transmission path information includes the transmission path type and the transmission path type is the sidelink, determining that the format of the MAC PDU is a MAC PDU format of a sidelink interface; when the transmission path information includes the transmission path type and the transmission path type is the Uu link, determining that the format of the MAC PDU is a MAC PDU format of a Uu interface; when the transmission path information includes the transmission path type corresponding to a first bearer or a first logical channel, then for a first bearer or a first logical channel using a sidelink, determining that the format of the MAC PDU is a MAC PDU format of a sidelink interface; for a first bearer or a first logical channel using a Uu link, determining that the format of the MAC PDU is a MAC PDU format of a Uu interface; when the transmission path information includes the transmission path type corresponding to a specific object, then for a specific object using a sidelink, determining that the format of the MAC PDU is a MAC PDU format of a sidelink interface; and for a specific object using a Uu link, determining that the format of the MAC PDU is a MAC PDU format of a Uu interface.

Optionally, when the format of the MAC PDU is determined to be the MAC PDU format of a sidelink interface, the method further includes:
when a logical channel of the terminal is a logical channel of a Uu interface, encapsulating according to the MAC PDU format of the Uu interface to obtain a first data packet;
adding a sidelink interface shared channel SL-SCH sub-header to a MAC PDU header of the first data packet;
wherein the SL-SCH sub-header includes first indication information of a source layer-2 address and a target layer-2 address corresponding to a sidelink interface.

Optionally, determining the source layer-2 address and the target layer-2 address includes:
receiving a second message from a network device, and determining the source layer-2 address and the target layer-2 address corresponding to the sidelink interface according to the second message, wherein the second message includes a source layer-2 address and a target layer-2 address corresponding to a sidelink interface;
   or
determining the source layer-2 address and the target layer-2 address corresponding to the sidelink interface based on implementation of the terminal.

Optionally, when the format of the MAC PDU is determined to be a MAC PDU format of a Uu interface, the method further includes:
when the logical channel of the terminal is a sidelink interface logical channel, encapsulating according to the MAC PDU format of the sidelink interface to obtain a second data packet; and
carrying second indication information in an SL-SCH sub-header in a MAC PDU of the second data packet; or adding a MAC sub-PDU at a header or a tail of a MAC PDU of the second data packet, wherein the MAC sub-PDU includes a MAC sub-header or the MAC sub-PDU includes a MAC sub-header and a MAC control element (MAC CE), the MAC sub-header or the MAC CE carries second indication information;
the second indication information is used to indicate one of the following information: whether the network device needs to deliver data included in the MAC PDU to the core network, whether the network device directly forwards the data included in the MAC PDU in an air interface, the transmission path information corresponding to the data included in the MAC PDU, and air interface identification information of a peer terminal of the terminal on the Uu interface.

Optionally, the air interface identification information of the peer terminal at the Uu interface includes at least one of the following:
an RNTI of the peer terminal at the Uu interface; identification information of a network device and/or a cell to which the peer terminal belongs.

Optionally, the receiving a first message from a network device includes:
receiving the first message from the network device through first signaling; the first signaling includes at least one of the following: radio resource control RRC signaling, MAC signaling, and physical layer signaling.

Optionally, the determining the scrambling mode of the transmission block TB according to the transmission path information includes at least one of the following:
when the transmission path information includes the transmission path type and the transmission path type is the sidelink, determining that the TB adopts a sidelink interface scrambling mode;
when the transmission path information includes the transmission path type and the transmission path type is the Uu link, determining that the TB adopts a Uu scrambling mode;
when the transmission path information includes the transmission path type corresponding to the first bearer or the first logical channel, determining that the TB adopts a sidelink interface scrambling mode, for the first bearer or the first logical channel using a sidelink; determining that the TB adopts a Uu scrambling mode, for the first bearer or the first logical channel using a Uu link;
when the transmission path information includes the transmission path type corresponding to a specific object, determining that the TB adopts a sidelink interface scrambling mode for a specific object using a sidelink; determining that the TB adopts a Uu scrambling mode, for a specific object using a Uu link.

A data transmission method performed by a network device is provided in the embodiments of the present disclosure. The method includes:
sending a first message to a terminal, wherein the first message at least carries transmission path information corresponding to the terminal, and the transmission path information is used by the terminal to determine a format of a Media Access Control (MAC) Protocol Data Unit (PDU) of a MAC layer and/or a scrambling mode of a transmission block (TB).

Optionally, the transmission path information includes one of the following:
a transmission path type; a transmission path type corresponding to a first bearer or a first logical channel; a transmission path type corresponding to a specific object; a transmission path type corresponding to a first bearer or a first logical channel corresponding to a specific object; a radio network temporary identifier (RNTI) type monitored by the terminal;
wherein the transmission path type includes: a Uu link or a sidelink;
the RNTI type includes an RNTI for scheduling a sidelink interface resource or an RNTI for scheduling a Uu interface resource;
the specific object includes one of the following:
   a target layer-2 address; a combination of a source layer-2 address and a target layer-2 address; a combination of a source layer-2 address, a target layer-2 address, and a transmission type.

Optionally, the method further includes: sending a second message to the terminal, wherein the second message includes a source layer-2 address and a target layer-2 address corresponding to the sidelink interface.

Optionally, the sending a first message to a terminal includes: sending the first message to the terminal through first signaling; the first signaling includes at least one of the following: radio resource control RRC signaling, MAC signaling, and physical layer signaling.

Optionally, the method further includes:
receiving a MAC PDU from the terminal, and determining, according to target information in the MAC PDU, a transmission mode corresponding to data included in the MAC PDU; or
receiving a TB from the terminal, and determining a transmission mode corresponding to data included in the TB according to an RNTI used when the terminal scrambles the TB;
wherein the transmission mode includes: sending to a core network or forwarding to a peer terminal of the terminal through a Uu interface;
wherein the target information includes one of the following:
   first indication information of a source layer-2 address and a target layer-2 address corresponding to a sidelink interface and carried in a sidelink interface shared channel SL-SCH sub-header;
   second indication information carried in a MAC sub-PDU subheader or a MAC CE, wherein the second indication information is used to indicates one of following: whether the network device needs to deliver data included in the MAC PDU to a core network, whether the network device directly forwards data included in the MAC PDU in an air interface, the transmission path information corresponding to data included in the MAC PDU, and air interface identification information of a peer terminal of the terminal on the Uu interface.

A terminal is provided in the embodiments of the present disclosure. The terminal includes a memory, a transceiver, and a processor,
wherein the memory is configured to store a computer program; the transceiver is configured to send and receive data under the control of the processor; and the processor is configured to read the computer program in the memory and perform the following operations:
determining transmission path information;
determining a format of a Media Access Control (MAC) Protocol Data Unit (PDU) of a MAC layer and/or a scrambling mode of a Transmission Block (TB) according to the transmission path information..

Optionally, the processor is configured to read the computer program in the memory to further perform the following operations: receiving a first message from a network device, wherein the first message at least carries transmission path information corresponding to the terminal.

Optionally, the transmission path information includes one of the following:
a transmission path type; a transmission path type corresponding to a first bearer or a first logical channel; a transmission path type corresponding to a specific object; a transmission path type of a first bearer or a first logical channel corresponding to a specific object; a radio network temporary identifier (RNTI) type monitored by the terminal; wherein the transmission path type includes: a Uu link or a sidelink; the RNTI type includes an RNTI for scheduling a sidelink interface resource or an RNTI for scheduling a Uu interface resource;
the specific object includes one of the following:
   a target layer-2 address; a combination of a source layer-2 address and a target layer-2 address; a combination of a source layer-2 address, a target layer-2 address, and a transmission type.

Optionally, the processor is configured to read the computer program in the memory to perform at least one of the following operations:
when the transmission path information includes the transmission path type and the transmission path type is the sidelink, determining that the format of the MAC PDU is a MAC PDU format of a sidelink interface;
when the transmission path information includes the transmission path type and the transmission path type is the Uu link, determining that the format of the MAC PDU is a MAC PDU format of a Uu interface;
when the transmission path information includes the transmission path type corresponding to a first bearer or a first logical channel, then for a first bearer or a first logical channel using a sidelink, determining that the format of the MAC PDU is a MAC PDU format of a sidelink interface; for a first bearer or a first logical channel using a Uu link, determining that the format of the MAC PDU is a MAC PDU format of a Uu interface;
when the transmission path information includes the transmission path type corresponding to a specific object, then for a specific object using a sidelink, determining that the format of the MAC PDU is a MAC PDU format of a sidelink interface; and for a specific object using a Uu link, determining that the format of the MAC PDU is a MAC PDU format of a Uu interface.

Optionally, when the format of the MAC PDU is determined to be the MAC PDU format of the sidelink interface, the processor is configured to read the computer program in the memory to further perform the following operations:
when a logical channel of the terminal is a logical channel of the Uu interface, encapsulating according to the MAC PDU format of the Uu interface to obtain a first data packet; adding a sidelink interface shared channel SL-SCH sub-header to a MAC PDU header of the first data packet; wherein the SL-SCH sub-header includes first indication information of a source layer-2 address and a target layer-2 address corresponding to a sidelink interface.

Optionally, determining the source layer-2 address and the target layer-2 address includes:
receiving a second message from a network device, and determining the source layer-2 address and the target layer-2 address corresponding to the sidelink interface according to the second message, wherein the second message includes a source layer-2 address and a target layer-2 address corresponding to a sidelink interface;
   or
determining the source layer-2 address and the target layer-2 address corresponding to the sidelink interface based on implementation of the terminal.

Optionally, when the format of the MAC PDU is determined to be a MAC PDU format of the Uu interface, the processor is configured to read the computer program in the memory to further perform the following operations:
when the logical channel of the terminal is a sidelink interface logical channel, encapsulating according to the MAC PDU format of the sidelink interface to obtain a second data packet;
carrying second indication information in an SL-SCH sub-header in a MAC PDU of the second data packet; or adding a MAC sub-PDU at a header or a tail of a MAC PDU of the second data packet, wherein the MAC sub-PDU includes a MAC sub-header or the MAC sub-PDU includes a MAC sub-header and a MAC control element (MAC CE), the MAC sub-header or the MAC CE carries second indication information;
the second indication information is used to indicate one of the following information: whether the network device needs to deliver data included in the MAC PDU to the core network, whether the network device directly forwards the data included in the MAC PDU in an air interface, the transmission path information corresponding to the data included in the MAC PDU, and air interface identification information of a peer terminal of the terminal on the Uu interface.

Optionally, the air interface identification information of the peer terminal at the Uu interface includes at least one of the following:
an RNTI of the peer terminal at the Uu interface; identification information of a network device and/or a cell to which the peer terminal belongs.

Optionally, the processor is configured to read the computer program in the memory to perform the following operations:
receiving the first message from the network device through first signaling; wherein the first signaling includes at least one of the following: radio resource control RRC signaling, MAC signaling, and physical layer signaling.

Optionally, the processor is configured to read the computer program in the memory to perform at least one of the following operations:
when the transmission path information includes the transmission path type and the transmission path type is the sidelink, determining that the TB adopts a sidelink interface scrambling mode;
when the transmission path information includes the transmission path type and the transmission path type is the Uu link, determining that the TB adopts a Uu scrambling mode;
when the transmission path information includes the transmission path type corresponding to the first bearer or the first logical channel, determining that the TB adopts a sidelink interface scrambling mode, for the first bearer or the first logical channel using a sidelink; determining that the TB adopts a Uu scrambling mode, for the first bearer or the first logical channel using a Uu link;
when the transmission path information includes the transmission path type corresponding to a specific object, determining that the TB adopts a sidelink interface scrambling mode for a specific object using a sidelink; determining that the TB adopts a Uu scrambling mode, for a specific object using a Uu link.

A network device is provided. The network device includes a memory, a transceiver, and a processor, wherein the memory is configured to store a computer program; the transceiver is configured to send and receive data under the control of the processor; and the processor is configured to read the computer program in the memory and perform the following operations:
sending a first message to a terminal, wherein the first message at least carries transmission path information corresponding to the terminal, and the transmission path information is used by the terminal to determine a format of a Media Access Control (MAC) Protocol Data Unit (PDU) of a MAC layer and/or a scrambling mode of a transmission block (TB).

Optionally, the transmission path information includes one of the following:
a transmission path type; a transmission path type corresponding to a first bearer or a first logical channel; a transmission path type corresponding to a specific object; a transmission path type corresponding to a first bearer or a first logical channel corresponding to a specific object; a radio network temporary identifier (RNTI) type monitored by the terminal; wherein the transmission path type includes: a Uu link or a sidelink; the RNTI type includes an RNTI for scheduling a sidelink interface resource or an RNTI for scheduling a Uu interface resource;
the specific object includes one of the following:
   a target layer-2 address; a combination of a source layer-2 address and a target layer-2 address; a combination of a source layer-2 address, a target layer-2 address, and a transmission type.

Optionally, the processor is configured to read the computer program in the memory to further perform the following operations:
sending a second message to the terminal, wherein the second message includes a source layer-2 address and a target layer-2 address corresponding to the sidelink interface.

Optionally, the processor is configured to read the computer program in the memory to perform the following operations:
sending the first message to the terminal through first signaling; the first signaling includes at least one of the following: radio resource control RRC signaling, MAC signaling, and physical layer signaling.

Optionally, the processor is configured to read the computer program in the memory to further perform the following operations:
receiving a MAC PDU from the terminal, and determining, according to target information in the MAC PDU, a transmission mode corresponding to data included in the MAC PDU; or
receiving a TB from the terminal, and determining a transmission mode corresponding to data included in the TB according to an RNTI used when the terminal scrambles the TB;
wherein the transmission mode includes: sending to a core network or forwarding to a peer terminal of the terminal through a Uu interface;
wherein the target information includes one of the following:
   first indication information of a source layer-2 address and a target layer-2 address corresponding to a sidelink interface and carried in a sidelink interface shared channel SL-SCH sub-header;
   second indication information carried in a MAC sub-PDU subheader or a MAC CE, wherein the second indication information is used to indicate whether the network device needs to deliver data included in the MAC PDU to a core network, whether the network device directly forwards data included in the MAC PDU in an air interface, the transmission path information corresponding to data included in the MAC PDU, and air interface identification information of a peer terminal of the terminal on the Uu interface.

A data transmission apparatus applied to a terminal is provided. The apparatus includes:
a first determining unit, configured to determine transmission path information; a second determining unit, configured to determine a format of a Media Access Control (MAC) Protocol Data Unit (PDU) of a MAC layer and/or a scrambling mode of a Transmission Block (TB) according to the transmission path information.

Optionally, the apparatus further includes: a first receiving unit, configured to receive a first message from a network device, wherein the first message at least carries transmission path information corresponding to the terminal.

Optionally, the transmission path information includes one of the following:
a transmission path type; a transmission path type corresponding to a first bearer or a first logical channel; a transmission path type corresponding to a specific object; a transmission path type of a first bearer or a first logical channel corresponding to a specific object; a radio network temporary identifier (RNTI) type monitored by the terminal; wherein the transmission path type includes: a Uu link or a sidelink;
the RNTI type includes an RNTI for scheduling a sidelink interface resource or an RNTI for scheduling a Uu interface resource;
the specific object includes one of the following:
   a target layer-2 address; a combination of a source layer-2 address and a target layer-2 address; a combination of a source layer-2 address, a target layer-2 address, and a transmission type.

Optionally, the second determining unit is configured to implement at least one of the following:
when the transmission path information includes the transmission path type and the transmission path type is the sidelink, determining that the format of the MAC PDU is a MAC PDU format of a sidelink interface;
when the transmission path information includes the transmission path type and the transmission path type is the Uu link, determining that the format of the MAC PDU is a MAC PDU format of a Uu interface;
when the transmission path information includes the transmission path type corresponding to a first bearer or a first logical channel, then for a first bearer or a first logical channel using a sidelink, determining that the format of the MAC PDU is a MAC PDU format of a sidelink interface; for a first bearer or a first logical channel using a Uu link, determining that the format of the MAC PDU is a MAC PDU format of a Uu interface;
when the transmission path information includes the transmission path type corresponding to a specific object, then for a specific object using a sidelink, determining that the format of the MAC PDU is a MAC PDU format of a sidelink interface; and for a specific object using a Uu link, determining that the format of the MAC PDU is a MAC PDU format of a Uu interface.

Optionally, when the format of the MAC PDU is determined to be the MAC PDU format of a sidelink interface, the apparatus further includes:
a first obtaining unit, configured to: when a logical channel of the terminal is a logical channel of a Uu interface, encapsulate according to the MAC PDU format of the Uu interface to obtain a first data packet;
a first processing unit, configured to add a sidelink interface shared channel SL-SCH sub-header to a MAC PDU header of the first data packet;
wherein the SL-SCH sub-header includes first indication information of a source layer-2 address and a target layer-2 address corresponding to a sidelink interface.

Optionally, determining the source layer-2 address and the target layer-2 address includes:
receiving a second message from a network device, and determining the source layer-2 address and the target layer-2 address corresponding to the sidelink interface according to the second message, wherein the second message includes a source layer-2 address and a target layer-2 address corresponding to a sidelink interface; or determining the source layer-2 address and the target layer-2 address corresponding to the sidelink interface based on implementation of the terminal.

Optionally, when the format of the MAC PDU is determined to be a MAC PDU format of a Uu interface, the apparatus further includes:
a second obtaining unit, configured to: when the logical channel of the terminal is a sidelink interface logical channel, encapsulate according to the MAC PDU format of the sidelink interface to obtain a second data packet;
a second processing unit, configured to carry second indication information in an SL-SCH sub-header in a MAC PDU of the second data packet; or add a MAC sub-PDU at a header or a tail of a MAC PDU of the second data packet, wherein the MAC sub-PDU includes a MAC sub-header or the MAC sub-PDU includes a MAC sub-header and a MAC control element (MAC CE), the MAC sub-header or the MAC CE carries second indication information;
the second indication information is used to indicate one of the following information: whether the network device needs to deliver data included in the MAC PDU to the core network, whether the network device directly forwards the data included in the MAC PDU in an air interface, the transmission path information corresponding to the data included in the MAC PDU, and air interface identification information of a peer terminal of the terminal on the Uu interface.

Optionally, the air interface identification information of the peer terminal at the Uu interface includes at least one of the following:
an RNTI of the peer terminal at the Uu interface; identification information of a network device and/or a cell to which the peer terminal belongs.

Optionally, the first receiving unit is configured to:
receive the first message from the network device through first signaling; the first signaling includes at least one of the following: radio resource control RRC signaling, MAC signaling, and physical layer signaling.

Optionally, the second determining unit is configured to implement at least one of the following:
when the transmission path information includes the transmission path type and the transmission path type is the sidelink, determining that the TB adopts a sidelink interface scrambling mode;
when the transmission path information includes the transmission path type and the transmission path type is the Uu link, determining that the TB adopts a Uu scrambling mode;
when the transmission path information includes the transmission path type corresponding to the first bearer or the first logical channel, determining that the TB adopts a sidelink interface scrambling mode, for the first bearer or the first logical channel using a sidelink; determining that the TB adopts a Uu scrambling mode, for the first bearer or the first logical channel using a Uu link;
when the transmission path information includes the transmission path type corresponding to a specific object, determining that the TB adopts a sidelink interface scrambling mode for a specific object using a sidelink; determining that the TB adopts a Uu scrambling mode, for a specific object using a Uu link.

A data transmission apparatus applied to a network device is provided, the apparatus includes:
a first sending unit, configured to send a first message to a terminal, wherein the first message at least carries transmission path information corresponding to the terminal, and the transmission path information is used by the terminal to determine a format of a Media Access Control (MAC) Protocol Data Unit (PDU) of a MAC layer and/or a scrambling mode of a transmission block (TB).

Optionally, the transmission path information includes one of the following:
a transmission path type; a transmission path type corresponding to a first bearer or a first logical channel; a transmission path type corresponding to a specific object; a transmission path type corresponding to a first bearer or a first logical channel corresponding to a specific object; a radio network temporary identifier (RNTI) type monitored by the terminal;
wherein the transmission path type includes: a Uu link or a sidelink;
the RNTI type includes an RNTI for scheduling a sidelink interface resource or an RNTI for scheduling a Uu interface resource;
the specific object includes one of the following:
   a target layer-2 address; a combination of a source layer-2 address and a target layer-2 address; a combination of a source layer-2 address, a target layer-2 address, and a transmission type.

Optionally, the apparatus further includes:
a second sending unit, configured to send a second message to the terminal, wherein the second message includes a source layer-2 address and a target layer-2 address corresponding to the sidelink interface.

Optionally, the first sending unit is configured to:
send the first message to the terminal through first signaling; the first signaling includes at least one of the following: radio resource control RRC signaling, MAC signaling, and physical layer signaling.

Optionally, the apparatus further includes:
a first determining unit, configured to receive a MAC PDU from the terminal, and determine, according to target information in the MAC PDU, a transmission mode corresponding to data included in the MAC PDU; or
a second determining unit, configured to receive a TB from the terminal, and determine a transmission mode corresponding to data included in the TB according to an RNTI used when the terminal scrambles the TB;
wherein the transmission mode includes: sending to a core network or forwarding to a peer terminal of the terminal through a Uu interface;
wherein the target information includes one of the following:
   first indication information of a source layer-2 address and a target layer-2 address corresponding to a sidelink interface and carried in a sidelink interface shared channel SL-SCH sub-header;
   second indication information carried in a MAC sub-PDU subheader or a MAC CE, wherein the second indication information is used to indicate one of following: whether the network device needs to deliver data included in the MAC PDU to a core network, whether the network device directly forwards data included in the MAC PDU in an air interface, the transmission path information corresponding to data included in the MAC PDU, and air interface identification information of a peer terminal of the terminal on the Uu interface.

A processor-readable storage medium is further provided, wherein the processor-readable storage medium stores a computer program, and the computer program is configured to cause a processor to perform the method according to the above.

The beneficial effects of the present disclosure are:
according to the foregoing solutions, the transmission path information is determined, and the format of the MAC PDU of the MAC layer and/or the scrambling mode of the TB are determined according to the transmission path information, which may ensure that the data packet can be normally transmitted after the terminal performs path switching between the Uu link and the sidelink, thereby ensuring service continuity.

### BRIEF DESCRIPTION OF THE DRAWINGS

In order to more clearly illustrate the technical solutions in the embodiments of the present disclosure or the related art, the drawings required in the description of the embodiments or the related art will be briefly described below, and obviously, the drawings in the following description are merely some embodiments disclosed in the present disclosure, and for those of ordinary skill in the art, other drawings may be obtained according to these drawings without creative efforts.
FIG. 1 shows a structural diagram of a network system applicable to an embodiment of the present disclosure;
FIG. 2 is a first schematic flowchart of a data transmission method according to an embodiment of the present disclosure;
FIG. 3 is a second schematic flowchart of a data transmission method according to an embodiment of the present disclosure;
FIG. 4 is a schematic structural diagram of a user plane protocol stack;
FIG. 5 is a first schematic flowchart of a specific application situation according to an embodiment of the present disclosure;
FIG. 6 is a second schematic flowchart of a specific application situation according to an embodiment of the present disclosure;
FIG. 7 is a first schematic diagram of units of an information transmission apparatus according to an embodiment of the present disclosure;
FIG. 8 is a structural diagram of a terminal according to an embodiment of the present disclosure;
FIG. 9 is a second schematic diagram of units of an information transmission apparatus according to an embodiment of the present disclosure;
FIG. 10 is a structural diagram of a network device according to an embodiment of the present disclosure.

### DETAILED DESCRIPTION

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

In the specification and claims of the present disclosure, the terms "first", "second", and the like are intended to distinguish between similar objects, and are not necessarily used to describe a specific order or sequence. It should be understood that the data used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices.

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects. In the embodiments of the present disclosure, the term "a plurality of" means two or more, and other quantifiers are similar.

In the embodiments of the present disclosure, words such as "exemplary" or "for example" are used to represent examples, illustrations, or descriptions. Any embodiment or design scheme described as "example" or "for example" in the embodiments of the present disclosure should not be explained as being more preferred or having more advantages than another embodiment or design scheme. Exactly, words such as "exemplary" or "for example" are used to present related concepts in a specific manner.

The related concepts mentioned in the present disclosure are briefly described below.

Traditional wireless communication uses a cellular network communication mode, that is, a terminal and a network device perform uplink/downlink data or control information transmission through a Uu interface.

Direct communication refers to a manner in which neighboring terminals may perform data transmission through a sidelink (also referred to as a sidelink or a PC5 link) within a short distance range. The radio interface corresponding to the Sidelink link is referred to as a sidelink interface (also referred to as a Sidelink interface or a PC5 interface).

The embodiments of the present disclosure are described below with reference to the accompanying drawings. The data transmission method, apparatus, terminal, and network device provided in the embodiments of the present disclosure may be applied to a wireless communication system. The wireless communication system may be a system using a fifth generation (5G) mobile communication technology (hereinafter referred to as a 5G system for short), and a person skilled in the art may understand that the 5G NR system is merely an example and is not limited.

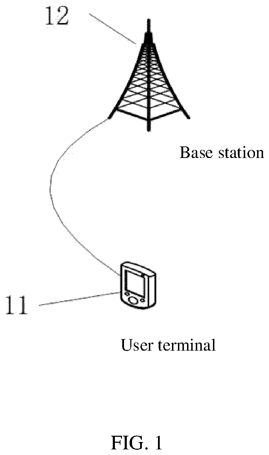

Referring to FIG. 1, FIG. 1 is a structural diagram of a network system to which an embodiment of the present disclosure may be applied, as shown in FIG. 1, the system includes a user terminal 11 and a base station 12, wherein the user terminal 11 may be user equipment (UE), for example the terminal-side device is, such as a mobile phone, a tablet personal computer, a laptop computer, a personal digital assistant (PDA), a mobile Internet device (MID), or a wearable device. It needs to be noted that the specific type of the user terminal 11 is not limited in the embodiments of the present disclosure. The base station 12 may be a base station in a 5G and a later version (for example, a gNB, a 5G NR NB), or a base station in another communication system, or referred to as a node B. It should be noted that, in the embodiments of the present disclosure, only a 5G base station is used as an example, but a specific type of the base station 12 is not limited.

Embodiments of the present disclosure provide a data transmission method and apparatus, a terminal, and a network device, to resolve a problem that switching of a transmission path affects service continuity.

The method and the apparatus are based on the same application concept, and because the method and the apparatus solve a similar principle of a problem, the implementation of the apparatus and the method may refer to each other, and details are not described herein again.

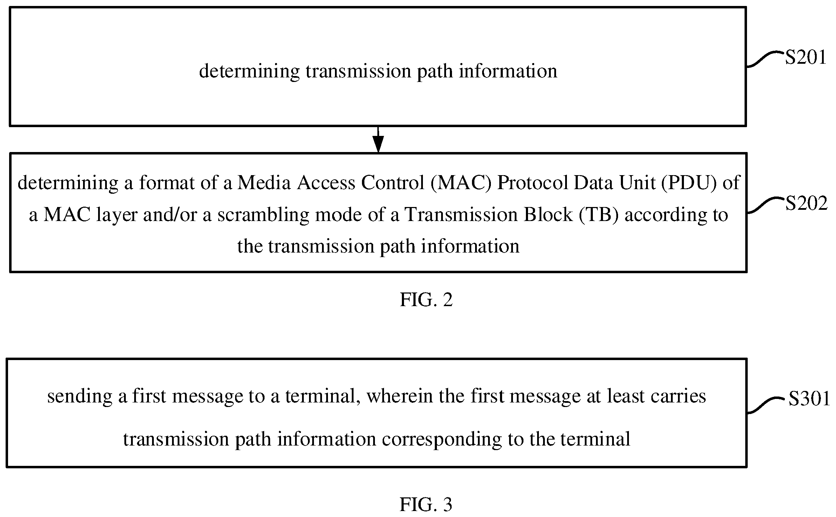

As shown in FIG. 2, an embodiment of the present disclosure provides a data transmission method performed by a terminal. The method includes:
Step S201: determining transmission path information;
Step S202: determining a format of a Media Access Control (MAC) Protocol Data Unit (PDU) of a MAC layer and/or a scrambling mode of a Transmission Block (TB) according to the transmission path information.

It should be noted that in the embodiments of the present disclosure, it can be ensured that the data packet can be normally transmitted after the terminal performs path switching between the Uu link and the sidelink, thereby ensuring service continuity.

Optionally, in another embodiment of the present disclosure, the transmission path information includes one of the following:
A11: transmission path type;
it should be noted that the transmission path type in this case is for the terminal;
that is, the transmission types of different terminals may be the same or different;
optionally, the transmission path type includes: a Uu link or a sidelink;
A12: a transmission path type corresponding to the first bearer or the first logical channel;
it should be noted that, in this case, the transmission path type is a bearer or a logical channel for the terminal; that is, the transmission path types corresponding to different bearers or logical channels of the same terminal may be the same or different;
A13: a transmission path type corresponding to a specific object;
optionally, the specific object includes one of the following:
   A131: a target layer-2 address;
   A132: a combination of a source layer-2 address and a target layer-2 address;
   A133: a combination of a source layer-2 address, a target layer-2 address, and a transmission type;
   for example, the transmission path information is a transmission path type corresponding to a target layer-2 address; for example, the transmission path information is a transmission path type corresponding to a combination of the source layer-2 address and the target layer-2 address; for example, the transmission path information is a transmission path type corresponding to a combination of a source layer-2 address, a target layer-2 address, and a transmission type;
   A14: a transmission path type of a first bearer or a first logical channel corresponding to a specific object;
   for example, the transmission path information is a transmission path type of a first bearer or a first logical channel corresponding to a specific object ; for example, the transmission path information is a transmission path type corresponding to a first bearer or a first logical channel corresponding to a combination of a source layer-2 address and a target layer-2 address; for example, the transmission path information is a transmission path type corresponding to a first bearer or a first logical channel corresponding to a combination of a source layer-2 address, a target layer-2 address, and a transmission type;
   A15: a radio network temporary identifier (RNTI) type monitored by the terminal; it should be noted that the RNTI type includes one of the following:
      A151: an RNTI for scheduling a sidelink interface resource;
      specifically, the RNTI may be a radio network temporary identifier (Sidelink RNTI, SL-RNTI) used by the Uu interface for scheduling a sidelink resource or a Sidelink Configured Scheduling RNTI (SL CS-RNTI) used by the Uu interface for scheduling a sidelink retransmission resource;
      A152: an RNTI for scheduling Uu interface resources;
      specifically, the RNTI may be a cell radio network temporary identifier (Cell RNTI, C-RNTI) used by the Uu interface for scheduling Uu interface resources or a radio network temporary identifier (Configured Scheduling RNTI, CS-RNTI) used by the Uu interface to schedule a Uu interface pre-configured resource, wherein the to schedule a Uu interface pre-configured resource includes activating a Uu interface pre-configured resource, deactivating a Uu interface pre-configured resource, or performing retransmission scheduling on a Uu interface pre-configured transmission.

Optionally, in another embodiment of the present disclosure, the method further includes: receiving a first message from a network device, wherein the first message at least carries transmission path information corresponding to the terminal.

It should be noted that, in this case, the transmission path information is notified by the network device to the terminal.

Optionally, in another embodiment of the present disclosure, an implementation manner of receiving the first message from the network device is specifically: receiving a first message from a network device through first signaling.

The first signaling includes at least one of the following: Radio Resource Control (RRC) signaling, MAC signaling, and physical layer signaling.

It should be noted that the MAC PDU format in the embodiments of the present disclosure includes a MAC PDU format of a sidelink interface and a MAC PDU format of a Uu interface, and the MAC PDUs in different formats are encapsulated in different manners, and the following first describes how to determine the format of the MAC PDU of the MAC layer.

Optionally, in another embodiment of the present disclosure, the determining the format of the MAC PDU of the MAC layer according to the transmission path information includes at least one of the following:
B11: when the transmission path information includes the transmission path type and the transmission path type is the sidelink, determining that the format of the MAC PDU is a MAC PDU format of a sidelink interface;
B12: when the transmission path information includes the transmission path type and the transmission path type is the Uu link, determining that the format of the MAC PDU is a MAC PDU format of a Uu interface; it should be noted that when the transmission path types are distinguished for terminals, the MAC PDU format is directly determined based on the transmission path type, that is, the format of the MAC PDU corresponding to the Uu link is a MAC PDU format of a Uu interface, and the format of the MAC PDU corresponding to the sidelink is a MAC PDU format of a sidelink interface;
B13: when the transmission path information includes the transmission path type corresponding to a first bearer or a first logical channel, then for a first bearer or a first logical channel using a sidelink, determining that the format of the MAC PDU is a MAC PDU format of a sidelink interface; for a first bearer or a first logical channel using a Uu link, determining that the format of the MAC PDU is a MAC PDU format of a Uu interface; it should be noted that when the transmission path types are distinguished for the bearers or the logical channels of the terminal, the MAC PDU format is directly determined based on the transmission path type of the bearer or the logical channel, that is, when the transmission path type corresponding to the bearer or the logical channel is a Uu link, the format of the MAC PDU corresponding to such a bearer or the logical channel is a MAC PDU format of a Uu interface; when the transmission path type corresponding to the bearer or the logical channel is a sidelink, the format of the MAC PDU corresponding to the bearer or the logical channel is a MAC PDU format of a sidelink interface;
B14: when the transmission path information includes the transmission path type corresponding to a specific object, then for a specific object using a sidelink, determining that the format of the MAC PDU is a MAC PDU format of a sidelink interface; and for a specific object using a Uu link, determining that the format of the MAC PDU is a MAC PDU format of a Uu interface; it should be noted that when the transmission path types are distinguished for specific objects, the MAC PDU format is directly determined based on a specific object, that is, when the transmission path type corresponding to the specific object is a Uu link, the format of the MAC PDU corresponding to the specific object is a MAC PDU format of a Uu interface; and when the transmission path type corresponding to the specific object is a sidelink, the format of the MAC PDU corresponding to the specific object is a MAC PDU format of a sidelink interface.

It should be further noted that, when the transmission path information includes a transmission path type corresponding to the first bearer or the first logical channel corresponding to the specific object, then for the first bearer or the first logical channel corresponding to the specific object using the sidelink, the format of the MAC PDU is determined to be a MAC PDU format of a sidelink interface; for the first bearer or the first logical channel corresponding to the specific object using the Uu link, it is determined that the format of the MAC PDU is the MAC PDU format of a Uu interface. That is, when the transmission path types are distinguished for the bearers or the logical channels corresponding to the specific object, the MAC PDU format is directly determined based on the bearer or the logical channel corresponding to the specific object, that is, when the transmission path type corresponding to the bearer or the logical channel corresponding to the specific object is the Uu link, the format of the MAC PDU corresponding to the bearer or the logical channel corresponding to the specific object is the MAC PDU format of a Uu interface; when the transmission path type corresponding to the bearer or the logical channel corresponding to the specific object is a sidelink, the format of the MAC PDU corresponding to the bearer or the logical channel corresponding to the specific object is a MAC PDU format of a sidelink interface.

The following describes the manners of encapsulating the MAC PDUs having different formats.
I. when the format of the MAC PDU is determined to be a MAC PDU format of a sidelink interface, it should be noted that, in another embodiment of the present disclosure, when the format of the MAC PDU is determined to be a MAC PDU format of a sidelink interface, the method further includes:
   when a logical channel of the terminal is a logical channel of a Uu interface, encapsulating according to the MAC PDU format of the Uu interface to obtain a first data packet;
   adding a sidelink interface shared channel (sidelink-Shared Channel, SL-SCH) sub-header to a MAC PDU header of the first data packet;
   wherein the SL-SCH sub-header at least includes first indication information of a source layer-2 address and a target layer-2 address corresponding to a sidelink interface.

It should be noted that the logical channel of a Uu interface in this embodiment of the present disclosure refers to a logical channel identified only through a logical channel identity (LCID).

Optionally, in another embodiment of the present disclosure, a manner of determining the source layer-2 address and the target layer-2 address includes one of the following:
C11: receiving a second message from a network device, and determining the source layer-2 address and the target layer-2 address corresponding to the sidelink interface according to the second message, wherein the second message includes a source layer-2 address and a target layer-2 address corresponding to a sidelink interface; that is, in this case, the source layer-2 address and the target layer-2 address are notified to terminals by the network device;
C12: determining the source layer-2 address and the target layer-2 address corresponding to the sidelink interface based on implementation of the terminal; that is, in this case, the source layer-2 address and the target layer-2 address are determined by the terminal itself without notification from the network device.

It may be understood that, in this case, the terminal determines the source layer-2 address and the target layer-2 address of the sidelink interface according to the configuration of the high layer of the terminal itself.

II. when the format of the MAC PDU is determined to be a MAC PDU format of a Uu interface, it should be noted that, in another embodiment of the present disclosure, when the format of the MAC PDU is determined to be a MAC PDU format of a Uu interface, the method further includes:
when the logical channel of the terminal is a sidelink interface logical channel, encapsulating according to the MAC PDU format of the sidelink interface to obtain a second data packet; and
carrying second indication information in an SL-SCH sub-header in a MAC PDU of the second data packet; or adding a MAC sub-PDU at a header or a tail of a MAC PDU of the second data packet, wherein the MAC sub-PDU includes a MAC sub-header or the MAC sub-PDU includes a MAC sub-header and a MAC control element (MAC CE), the MAC sub-header or the MAC CE carries second indication information.

It should be noted that, in this case, after the second data packet is obtained, in one case, the MAC sub-PDU may not be added to the MAC sub-PDU, but the second indication information is directly carried in the SL-SCH sub-header in the MAC PDU; in another case, the MAC sub-PDU needs to be added in the MAC sub-PDU, and further, when the MAC sub-PDU includes the MAC sub-header, the second indication information is carried in the MAC sub-header; and when the MAC sub-PDU includes the MAC sub-header and the MAC CE, the indication information is carried in the MAC CE.

It should be noted that the sidelink interface logical channel in this embodiment of the present disclosure refers to a logical channel identified by the source layer-2 (Layer 2, L2) address, the target L2 address, and the LCID.

Specifically, the second indication information is used to indicate one of the following information:
D11: whether the network device needs to deliver data included in the MAC PDU to the core network;
D12: whether the network device directly forwards the data included in the MAC PDU in an air interface;
D13: the transmission path information corresponding to the data included in the MAC PDU;
D14: air interface identification information of a peer terminal of the terminal on the Uu interface.

Optionally, the air interface identification information of the peer terminal at the Uu interface includes at least one of the following:
D141: an RNTI of a peer terminal at a Uu interface; optionally, the RNTI may be a cell radio network temporary identifier (C-RNTI);
D142: identification information of a network device and/or a cell to which the peer terminal belongs; specifically, the network device and/or cell to which the peer terminal belongs may be understood as a network device and/or a cell serving the peer terminal; it should also be noted that the network device and/or cell to which the peer terminal belongs may be the same as or different from the network device and/or cell to which the terminal belongs.

It should also be noted that when the terminal sends the MAC PDU, the network device receives the MAC PDU from the terminal, and determines the transmission mode corresponding to the data included in the MAC PDU according to the target information in the MAC PDU; the transmission mode includes: sending to a core network or forwarding to a peer terminal of the terminal through a Uu interface.

The target information includes one of the following:
first indication information of a source layer-2 address and a target layer-2 address corresponding to a sidelink interface and carried in a sidelink interface shared channel SL-SCH sub-header;
second indication information carried in a MAC sub-PDU subheader or a MAC CE, wherein the second indication information is used to indicate one of following: whether the network device needs to deliver data included in the MAC PDU to a core network, whether the network device directly forwards data included in the MAC PDU in an air interface, the transmission path information corresponding to data included in the MAC PDU, and air interface identification information of a peer terminal of the terminal on the Uu interface.

It should be noted that the scrambling mode of the TB in the embodiments of the present disclosure includes a sidelink interface scrambling mode and a Uu scrambling mode, and the following describes how to determine the scrambling mode of the TB.

Optionally, in another embodiment of the present disclosure, the determining a scrambling mode of the transmission block TB according to the transmission path information includes at least one of the following:
E11: when the transmission path information includes the transmission path type and the transmission path type is the sidelink, determining that the TB adopts a sidelink interface scrambling mode;
E12: when the transmission path information includes the transmission path type and the transmission path type is the Uu link, determining that the TB adopts a Uu scrambling mode;
it should be noted that when the transmission path types are distinguished for the terminals, the scrambling mode is directly determined based on the transmission path type, that is, the scrambling mode of the TB corresponding to the Uu link is the Uu scrambling mode, and the scrambling mode of the TB corresponding to the sidelink is a sidelink interface scrambling mode;
E13: when the transmission path information includes the transmission path type corresponding to the first bearer or the first logical channel, determining that the TB adopts a sidelink interface scrambling mode, for the first bearer or the first logical channel using a sidelink; determining that the TB adopts a Uu scrambling mode, for the first bearer or the first logical channel using a Uu link; it should be noted that when the transmission path types are distinguished for the bearers or the logical channels of the terminal, the scrambling mode of the TB is directly determined based on the transmission path type of the bearer or the logical channel, that is, when the transmission path type corresponding to the bearer or the logical channel is the Uu link, the scrambling mode of the TB corresponding to the bearer or the logical channel is the Uu scrambling mode; when the transmission path type corresponding to the bearer or the logical channel is a sidelink, a scrambling mode of the TB corresponding to the bearer or the logical channel is a sidelink interface scrambling mode;
E14: when the transmission path information includes the transmission path type corresponding to a specific object, determining that the TB adopts a sidelink interface scrambling mode for a specific object using a sidelink; determining that the TB adopts a Uu scrambling mode, for a specific object using a Uu link; and it should be noted that when the transmission path types are distinguished for specific objects, the scrambling mode of the TB is directly determined based on the specific object, that is, when the transmission path type corresponding to the specific object is a Uu link, the scrambling mode of the TB corresponding to the specific object is a Uu scrambling mode; and when the transmission path type corresponding to the specific object is a sidelink, the scrambling mode of the TB corresponding to the specific object is a sidelink interface scrambling mode.

It should be further noted that, when the transmission path information includes the transmission path type corresponding to the first bearer or the first logical channel corresponding to the specific object, then for the first bearer or the first logical channel corresponding to the specific object using the sidelink, the scrambling mode of the TB is determined to be a sidelink interface scrambling mode; for the first bearer or the first logical channel corresponding to the specific object using the Uu link, the scrambling mode of the TB is determined as the Uu scrambling mode; that is, when the transmission path types are distinguished for the bearers or the logical channels corresponding to the specific objects, the scrambling mode of the TB is directly determined based on the bearer or the logical channel corresponding to the specific object, that is, when the transmission path type corresponding to the bearer or the logical channel corresponding to the specific object is the Uu link, the scrambling mode of the TB corresponding to the bearer or the logical channel corresponding to the specific object is the Uu scrambling mode; when the transmission path type corresponding to the bearer or the logical channel corresponding to the specific object is a sidelink, the scrambling mode of the TB corresponding to the bearer or the logical channel corresponding to the specific object is a sidelink interface scrambling mode.

It should also be noted that, when the terminal sends the TB, the network device receives the TB from the terminal, and determines the transmission mode corresponding to the data included in the TB according to the RNTI used when the terminal scrambles the TB, wherein the transmission mode includes: sending to the core network or forwarding to the peer terminal of the terminal through the Uu interface.

Specifically, when the TB is scrambled by using the specific RNTI of the Uu interface, the data contained in the TB is forwarded to the peer terminal of the terminal through the Uu interface; when the TB is scrambled by using a RNTI other than the specific RNTI of the Uu interface, the data contained in the TB is sent to the core network. The specific RNTI is allocated by the network device to the terminal, the terminal receives the PDCCH scheduled by using the specific RNTI, the TB transmitted on the PDCCH is scrambled by using the specific RNTI, and the network device receives the TB scrambled by the specific RNTI, and then forwards the data included in the TB to the peer terminal of the terminal directly through the Uu interface.

It should also be noted that any message from the network device to the terminal in the embodiments of the present disclosure may be sent using RRC signaling, MAC CE, or physical layer signaling.

It should be noted that, through at least one embodiment of the present disclosure, there is provided a MAC PDU encapsulation method or a TB scrambling method when a transmission path of a terminal is switched between a Uu link and a sidelink. By means of the method, it can be ensured that service continuity is not affected after a transmission path is switched, data transmission can be better performed by using a Uu/SL resource, and a system resource utilization rate is improved.

The technical solutions provided in the embodiments of the present disclosure may be applicable to various systems, especially 5G systems. For example, the applicable system may be a Global System of Mobile Communication (GSM) system, a Code Division Multiple Access (CDMA) system, a Wideband Code Division Multiple Access (WCDMA) system, a general packet radio service (GPRS) system, a Long Term Evolution (LTE) system, a LTE frequency division duplex (FDD) system, a LTE time division duplex (TDD) system, a Long Term Evolution Advanced (LTE-A) system, a Universal Mobile Telecommunication System (UMTS), a Worldwide Interoperability for Microwave Access (LTE-A) system, a 5G new radio (NR) system, and the like. The plurality of systems include a terminal (which may also be referred to as a terminal device) and a network device. The system may further include a core network part, for example, an Evolved Packet System (EPS), a 5G system (5G System, 5GS), and the like.

The terminal device in the embodiments of the present disclosure may be a device that provides voice and/or data connectivity to a user, a handheld device having a wireless connection function, or another processing device connected to a wireless modem. In different systems, the name of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, devices such as a Personal Communication Service (PCS) phone, a cordless phone, a Session Initiated Protocol (SIP) phone, a Wireless Local Loop (WLL) station, and a personal digital assistant (PDA). The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

The network device in this embodiment of the present disclosure may be a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network device may be configured to replace the received over-the-air frame with an Internet Protocol (IP) packet as a router between the wireless terminal device and the rest of the access network, wherein the rest of the access network may include an Internet Protocol (IP) communication network. The network device may also coordinate attribute management of the air interface. For example, the network device in the embodiments of the present disclosure may be a network device (a Base Transceiver Station, BTS) in a Global System for Mobile Communications (GSM) or a Code Division Multiple Access (Code Division Multiple Access, CDMA), or may be a 5G base station in a Long Term Evolution (LTE) system, or a Home Evolved Node B (Femto), a pico base station (Pico), or the like, which is not limited in the embodiments of the present disclosure. In some network structures, the network device may include a centralized unit (CU) node and a distributed unit (DU) node, and the centralized unit and the distribution unit may also be geographically separated.

The network device and the terminal device may each perform multi-input multi-output (MIMO) transmission by using one or more antennas, and the MIMO transmission may be single user MIMO (SU-MIMO) or multi-user MIMO (multiple user MIMO, MU-MIMO). The MIMO transmission may be two-dimensional MIMO (2D-MIMO), three-dimensional MIMO (3D-MIMO), full dimension MIMO (FD-MIMO) or super-large-scale MIMO (Massive-MIMO), or diversity transmission or precoding transmission or beamforming transmission, according to the form and quantity of the root antenna combination.

As shown in FIG. 3, an embodiment of the present disclosure provides a data transmission method, performed by a network device. The method includes:
Step S301: sending a first message to a terminal, wherein the first message at least carries transmission path information corresponding to the terminal, and the transmission path information is used by the terminal to determine a format of a Media Access Control (MAC) Protocol Data Unit (PDU) of a MAC layer and/or a scrambling mode of a transmission block (TB).

Optionally, the transmission path information includes one of the following:
a transmission path type; a transmission path type corresponding to a first bearer or a first logical channel; a transmission path type corresponding to a specific object; a transmission path type corresponding to a first bearer or a first logical channel corresponding to a specific object; a radio network temporary identifier (RNTI) type monitored by the terminal;
wherein the transmission path type includes: a Uu link or a sidelink;
the RNTI type includes an RNTI for scheduling a sidelink interface resource or an RNTI for scheduling a Uu interface resource;
the specific object includes one of the following:
   a target layer-2 address; a combination of a source layer-2 address and a target layer-2 address; a combination of a source layer-2 address, a target layer-2 address, and a transmission type.

Optionally, the method further includes: sending a second message to the terminal, wherein the second message includes a source layer-2 address and a target layer-2 address corresponding to the sidelink interface.

Optionally, the sending a first message to a terminal includes: sending the first message to the terminal through first signaling; the first signaling includes at least one of the following: radio resource control RRC signaling, MAC signaling, and physical layer signaling.

Optionally, the method further includes:
receiving a MAC PDU from the terminal, and determining, according to target information in the MAC PDU, a transmission mode corresponding to data included in the MAC PDU; or
receiving a TB from the terminal, and determining a transmission mode corresponding to data included in the TB according to an RNTI used when the terminal scrambles the TB;
wherein the transmission mode includes: sending to a core network or forwarding to a peer terminal of the terminal through a Uu interface;
wherein the target information includes one of the following:
   first indication information of a source layer-2 address and a target layer-2 address corresponding to a sidelink interface and carried in a sidelink interface shared channel SL-SCH sub-header;
   second indication information carried in a MAC sub-PDU subheader or a MAC CE, wherein the second indication information is used to indicates one of following: whether the network device needs to deliver data included in the MAC PDU to a core network, whether the network device directly forwards data included in the MAC PDU in an air interface, the transmission path information corresponding to data included in the MAC PDU, and air interface identification information of a peer terminal of the terminal on the Uu interface.

It should be noted that all implementations in the foregoing embodiments are applicable to the embodiments of the data transmission method applied to the network device side, and can also achieve the same technical effect, and details are not described herein again.

The specific application manners of the present disclosure are described below in detail from the perspective of the sending terminal and the receiving terminal.

### Application case 1: the sidelink is switched to the Uu link

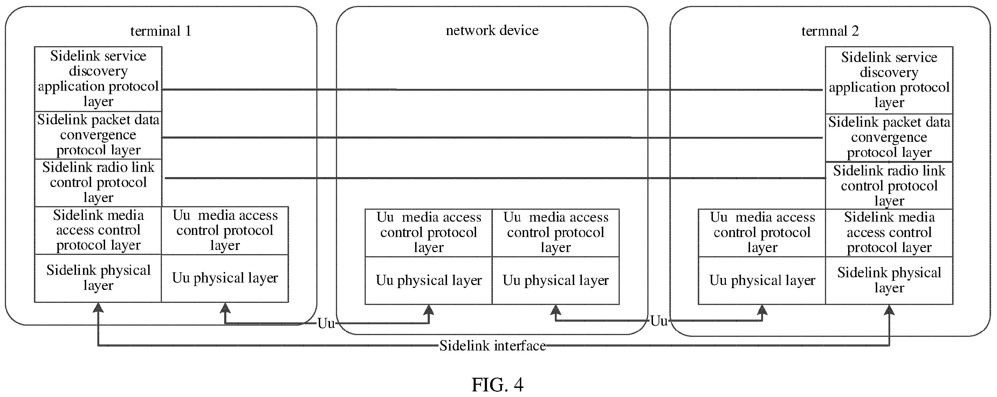

A schematic structural diagram of a corresponding user plane protocol stack in this application case is shown in FIG. 4.

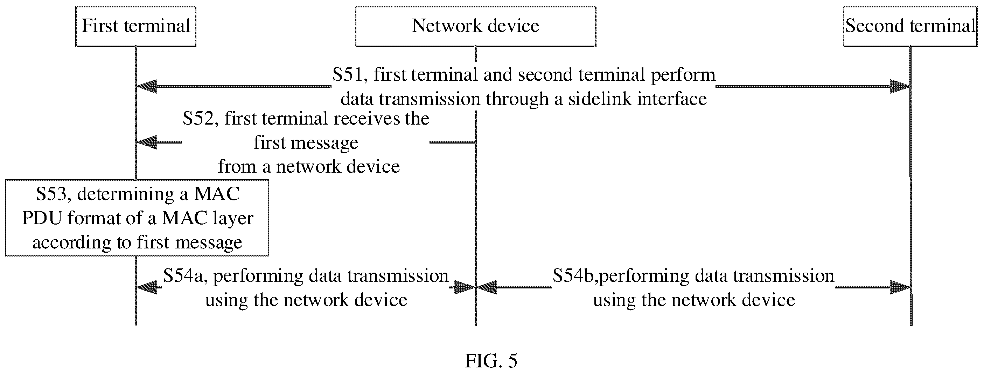

Specifically, as shown in FIG. 5, the main implementation process in this case includes the following processes:
Step S51: data transmission is performed between the first terminal and the second terminal through a sidelink interface.
Step S52: the first terminal receives the first message from the network device.

The first message may specifically use any one of the following signaling formats: RRC signaling, MAC signaling, and physical layer signaling.

Specifically, the first message at least carries transmission path information corresponding to the first terminal.

Specifically, the transmission path information includes one of the following: a transmission path type; a transmission path type corresponding to a first bearer or a first logical channel; a transmission path type corresponding to a specific object; a transmission path type of a first bearer or a first logical channel corresponding to a specific object.

Step S53: the first terminal determines the format of the MAC PDU of the MAC layer according to the first message.

In this application, the specific implementation of determining the format of the MAC PDU of the MAC layer according to the first message includes at least one of the following:
when the transmission path information includes the transmission path type and the transmission path type is the sidelink, determining that the format of the MAC PDU is a MAC PDU format of a sidelink interface; when the transmission path information includes the transmission path type and the transmission path type is the Uu link, determining that the format of the MAC PDU is a MAC PDU format of a Uu interface; when the transmission path information includes the transmission path type corresponding to a first bearer or a first logical channel, then for a first bearer or a first logical channel using a sidelink, determining that the format of the MAC PDU is a MAC PDU format of a sidelink interface; for a first bearer or a first logical channel using a Uu link, determining that the format of the MAC PDU is a MAC PDU format of a Uu interface; when the transmission path information includes the transmission path type corresponding to a specific object, then for a specific object using a sidelink, determining that the format of the MAC PDU is a MAC PDU format of a sidelink interface; and for a specific object using a Uu link, determining that the format of the MAC PDU is a MAC PDU format of a Uu interface.

In this application case, when the format of the MAC PDU is determined to be a MAC PDU format of a Uu interface, and if a logical channel of the terminal is a logical channel of a sidelink interface, encapsulating according to the MAC PDU format of the sidelink interface to obtain a second data packet; adding MAC subPDU (MAC subPDU) at the header or the tail of the MAC PDU of the second data packet; wherein the MAC subPDU includes the MAC subheader and the MAC Control Element (CE), and the MAC CE carries the second indication information.

Specifically, the second indication information is used to indicate one of the following information: whether the network device needs to deliver data included in the MAC PDU to a core network, whether the network device directly forwards data included in the MAC PDU in an air interface, the transmission path information corresponding to data included in the MAC PDU, and air interface identification information of a peer terminal (i.e., the second terminal) of the terminal on the Uu interface.

Specifically, the air interface identification information of the peer terminal at the Uu interface includes at least one of the following: an RNTI of the peer terminal at the Uu interface; identification information of a network device and/or a cell to which the peer terminal belongs.

Step S54a/step S54b: performing data transmission between the first terminal and the second terminal by using a network device.

It should be noted that, in this application case, the network device is similar to an L2 relay (including a MAC and a physical layer), and when the MAC PDU received by the network device includes the special MAC subPDU mentioned in step S53, it is determined, according to the air interface identification information of the target terminal carried in the MAC subPDU, how the MAC PDU needs to be forwarded in the air interface, for example, which RNTI is used for scheduling, which cell is scheduled, etc.

### Application case 2: the Uu link is switched to the sidelink

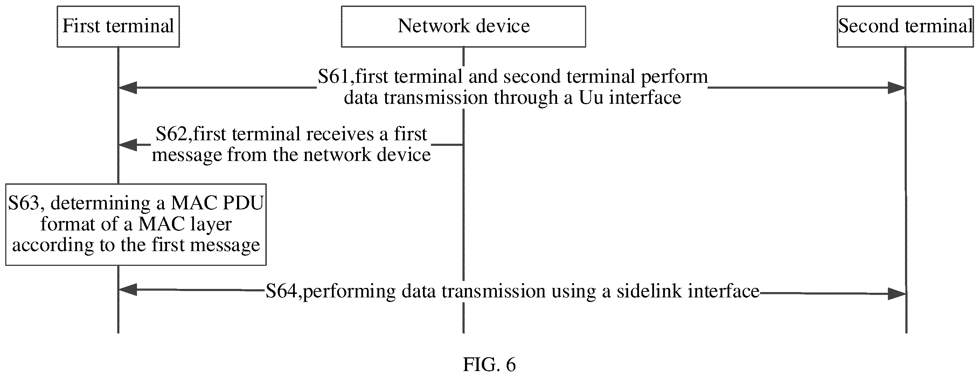

As shown in FIG. 6, the following processes are mainly included:
Step S61: data transmission is performed between the first terminal and the second terminal through a Uu interface.
Step S62: the first terminal receives the first message from the network device;

The first message may specifically use any one of the following signaling formats: RRC signaling, MAC signaling, and physical layer signaling.

Specifically, the first message at least carries transmission path information corresponding to the first terminal.

Specifically, the transmission path information includes one of the following: a transmission path type; a transmission path type corresponding to a first bearer or a first logical channel; a transmission path type corresponding to a specific object; a transmission path type of a first bearer or a first logical channel corresponding to a specific object.

Step S63: the terminal determines the format of the MAC PDU of the MAC layer according to the first message;

In this application case, the specific implementation manner of determining the format of the MAC PDU of the MAC layer according to the first message includes one of the following:
when the transmission path information includes the transmission path type and the transmission path type is the sidelink, determining that the format of the MAC PDU is a MAC PDU format of a sidelink interface; when the transmission path information includes the transmission path type and the transmission path type is the Uu link, determining that the format of the MAC PDU is a MAC PDU format of a Uu interface; when the transmission path information includes the transmission path type corresponding to a first bearer or a first logical channel, then for a first bearer or a first logical channel using a sidelink, determining that the format of the MAC PDU is a MAC PDU format of a sidelink interface; for a first bearer or a first logical channel using a Uu link, determining that the format of the MAC PDU is a MAC PDU format of a Uu interface; when the transmission path information includes the transmission path type corresponding to a specific object, then for a specific object using a sidelink, determining that the format of the MAC PDU is a MAC PDU format of a sidelink interface; and for a specific object using a Uu link, determining that the format of the MAC PDU is a MAC PDU format of a Uu interface.

In this application case, when the format of the MAC PDU is determined to be a MAC PDU format of a sidelink interface, if a logical channel of the terminal is a logical channel of a Uu interface, the terminal encapsulates according to the MAC PDU format of the Uu interface to obtain a first data packet, and adds a sidelink interface shared channel SL-SCH sub-header to a MAC PDU header of the first data packet; specifically the SL-SCH sub-header includes first indication information of a source layer-2 address and a target layer-2 address corresponding to a sidelink interface.

Specifically, determining the source layer-2 address and the target layer-2 address includes one of following:
receiving a second message from a network device, and determining the source layer-2 address and the target layer-2 address corresponding to the sidelink interface according to the second message, wherein the second message includes a source layer-2 address and a target layer-2 address corresponding to a sidelink interface; or
determining the source layer-2 address and the target layer-2 address corresponding to the sidelink interface based on implementation of the terminal.

In addition, in this application case, the data packet encapsulation at the high layer also needs to be enhanced, and the target IP address of the data packet should be the IP address of the peer terminal of the first terminal.

Step S64: data transmission is performed between the first terminal and the second terminal by using a sidelink interface.

### Application case 3: the Uu link is switched to the sidelink

Specifically, the following processes are mainly included:
Step S71: data transmission is performed between the first terminal and the second terminal through a Uu interface.
Step S72: the first terminal receives the first message from the network device.

The first message may specifically use any one of the following signaling formats: RRC signaling, MAC signaling, and physical layer signaling.

Specifically, the first message at least carries transmission path information corresponding to the first terminal.

Specifically, the transmission path information includes one of the following: a transmission path type; a transmission path type corresponding to a first bearer or a first logical channel; a transmission path type corresponding to a specific object; a transmission path type corresponding to a first bearer or a first logical channel corresponding to a specific object; a radio network temporary identifier (RNTI) type monitored by the terminal.

Step S73: the terminal determines a scrambling mode of the TB according to the first message.

In this application case, the specific implementation manner of determining the scrambling mode of the TB according to the first message includes one of the following:
when the transmission path information includes the transmission path type and the transmission path type is the sidelink, determining that the TB adopts a sidelink interface scrambling mode;
when the transmission path information includes the transmission path type and the transmission path type is the Uu link, determining that the TB adopts a Uu scrambling mode;
when the transmission path information includes the transmission path type corresponding to the first bearer or the first logical channel, determining that the TB adopts a sidelink interface scrambling mode, for the first bearer or the first logical channel using a sidelink; determining that the TB adopts a Uu scrambling mode, for the first bearer or the first logical channel using a Uu link;
when the transmission path information includes the transmission path type corresponding to a specific object, determining that the TB adopts a sidelink interface scrambling mode for a specific object using a sidelink; determining that the TB adopts a Uu scrambling mode, for a specific object using a Uu link.

Step S74: data transmission is performed between the first terminal and the second terminal by using a sidelink interface.

It should be noted that the first terminal performs TB scrambling and sending based on the determined scrambling mode, to implement data transmission in the sidelink interface.

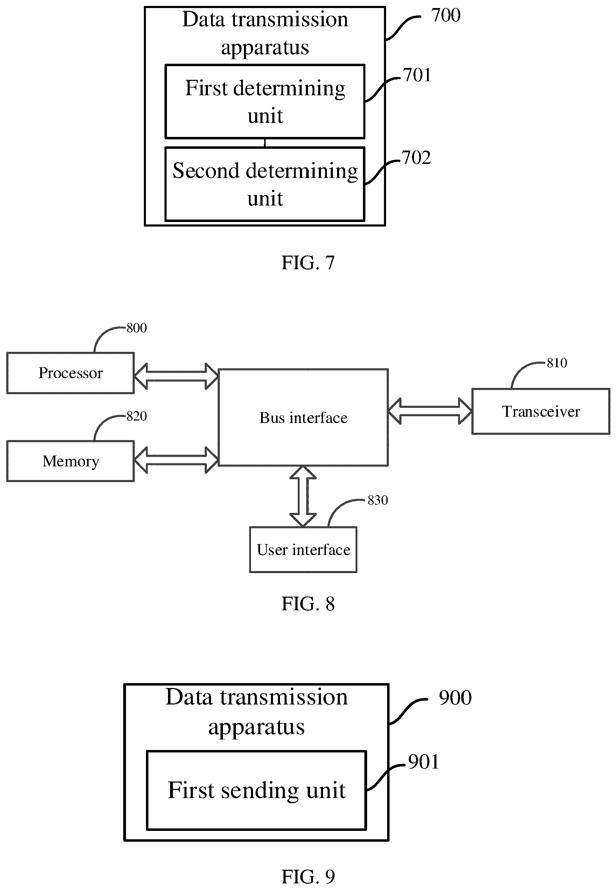

As shown in FIG. 7, an embodiment of the present disclosure provides a data transmission apparatus 700 applied to a terminal and the apparatus includes:
a first determining unit 701 configured to determine transmission path information;
a second determining unit 702 configured to determine a format of a Media Access Control (MAC) Protocol Data Unit (PDU) of a MAC layer and/or a scrambling mode of a Transmission Block (TB) according to the transmission path information.

Optionally, the apparatus further includes: a first receiving unit, configured to receive a first message from a network device, wherein the first message at least carries transmission path information corresponding to the terminal.

Optionally, the transmission path information includes one of the following:
a transmission path type; a transmission path type corresponding to a first bearer or a first logical channel; a transmission path type corresponding to a specific object; a transmission path type of a first bearer or a first logical channel corresponding to a specific object; a radio network temporary identifier (RNTI) type monitored by the terminal; wherein the transmission path type includes: a Uu link or a sidelink;
the RNTI type includes an RNTI for scheduling a sidelink interface resource or an RNTI for scheduling a Uu interface resource;
the specific object includes one of the following:
   a target layer-2 address; a combination of a source layer-2 address and a target layer-2 address; a combination of a source layer-2 address, a target layer-2 address, and a transmission type.

Optionally, the second determining unit 702 is configured to implement at least one of the following:
when the transmission path information includes the transmission path type and the transmission path type is the sidelink, determining that the format of the MAC PDU is a MAC PDU format of a sidelink interface;
when the transmission path information includes the transmission path type and the transmission path type is the Uu link, determining that the format of the MAC PDU is a MAC PDU format of a Uu interface;
when the transmission path information includes the transmission path type corresponding to a first bearer or a first logical channel, then for a first bearer or a first logical channel using a sidelink, determining that the format of the MAC PDU is a MAC PDU format of a sidelink interface; for a first bearer or a first logical channel using a Uu link, determining that the format of the MAC PDU is a MAC PDU format of a Uu interface;
when the transmission path information includes the transmission path type corresponding to a specific object, then for a specific object using a sidelink, determining that the format of the MAC PDU is a MAC PDU format of a sidelink interface; and for a specific object using a Uu link, determining that the format of the MAC PDU is a MAC PDU format of a Uu interface.

Optionally, when the format of the MAC PDU is determined to be the MAC PDU format of a sidelink interface, the apparatus further includes:
a first obtaining unit, configured to: when a logical channel of the terminal is a logical channel of a Uu interface, encapsulate according to the MAC PDU format of the Uu interface to obtain a first data packet;
a first processing unit, configured to add a sidelink interface shared channel SL-SCH sub-header to a MAC PDU header of the first data packet;
wherein the SL-SCH sub-header includes first indication information of a source layer-2 address and a target layer-2 address corresponding to a sidelink interface.

Optionally, determining the source layer-2 address and the target layer-2 address includes:
receiving a second message from a network device, and determining the source layer-2 address and the target layer-2 address corresponding to the sidelink interface according to the second message, wherein the second message includes a source layer-2 address and a target layer-2 address corresponding to a sidelink interface; or determining the source layer-2 address and the target layer-2 address corresponding to the sidelink interface based on implementation of the terminal.

Optionally, when the format of the MAC PDU is determined to be a MAC PDU format of a Uu interface, the apparatus further includes:
a second obtaining unit, configured to: when the logical channel of the terminal is a sidelink interface logical channel, encapsulate according to the MAC PDU format of the sidelink interface to obtain a second data packet;
a second processing unit, configured to carry second indication information in an SL-SCH sub-header in a MAC PDU of the second data packet; or add a MAC sub-PDU at a header or a tail of a MAC PDU of the second data packet, wherein the MAC sub-PDU includes a MAC sub-header or the MAC sub-PDU includes a MAC sub-header and a MAC control element (MAC CE), the MAC sub-header or the MAC CE carries second indication information;
the second indication information is used to indicate one of the following information: whether the network device needs to deliver data included in the MAC PDU to the core network, whether the network device directly forwards the data included in the MAC PDU in an air interface, the transmission path information corresponding to the data included in the MAC PDU, and air interface identification information of a peer terminal of the terminal on the Uu interface.

Optionally, the air interface identification information of the peer terminal at the Uu interface includes at least one of the following:
an RNTI of the peer terminal at the Uu interface; identification information of a network device and/or a cell to which the peer terminal belongs.

Optionally, the first receiving unit is configured to:
receive the first message from the network device through first signaling; the first signaling includes at least one of the following: radio resource control RRC signaling, MAC signaling, and physical layer signaling.

Optionally, the second determining unit 702 is configured to implement at least one of the following:
when the transmission path information includes the transmission path type and the transmission path type is the sidelink, determining that the TB adopts a sidelink interface scrambling mode;
when the transmission path information includes the transmission path type and the transmission path type is the Uu link, determining that the TB adopts a Uu scrambling mode;
when the transmission path information includes the transmission path type corresponding to the first bearer or the first logical channel, determining that the TB adopts a sidelink interface scrambling mode, for the first bearer or the first logical channel using a sidelink; determining that the TB adopts a Uu scrambling mode, for the first bearer or the first logical channel using a Uu link;
when the transmission path information includes the transmission path type corresponding to a specific object, determining that the TB adopts a sidelink interface scrambling mode for a specific object using a sidelink; determining that the TB adopts a Uu scrambling mode, for a specific object using a Uu link.

It should be noted that the apparatus embodiment is an apparatus corresponding to the foregoing method embodiments, and all implementations in the foregoing method embodiments are applicable to the apparatus embodiment, and can also achieve the same technical effect.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solution may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

As shown in FIG. 8, an embodiment of the present disclosure further provides a terminal, including a processor 800, a transceiver 810, a memory 820, and a program stored on the memory 820 and executable on the processor 800, wherein the transceiver 810 is connected to the processor 800 and the memory 820 through a bus interface, and the processor 800 is configured to read the program in the memory to perform the following processes:
determining transmission path information;
determining a format of a Media Access Control (MAC) Protocol Data Unit (PDU) of a MAC layer and/or a scrambling mode of a Transmission Block (TB) according to the transmission path information.

The transceiver 810 is configured to receive and send data under the control of the processor 800.

In FIG. 8, the bus architecture may include any number of interconnected buses and bridges, and specifically, various circuits of one or more processors represented by the processor 800 and a memory represented by the memory 820 are linked together. The bus architecture may also link various other circuits, such as a peripheral device, a voltage regulator, and a power management circuit, which are well known in the art, and therefore are not further described herein. The bus interface provides an interface. The transceiver 810 may be a plurality of elements, including a transmitter and a receiver, and provides units for communicating with various other apparatuses on a transmission medium, wherein the transmission mediums include transmission media such as a wireless channel, a wired channel, and an optical cable. For different user equipment, the user interface 830 may also be an interface capable of being externally connected to a device needing to be internally connected, and the connected device includes but is not limited to a keypad, a display, a speaker, a microphone, a joystick, and the like.

The processor 800 is responsible for managing the bus architecture and general processing, and the memory 820 may store data used by the processor 800 when performing operations.

Optionally, the processor 800 may be a Central Processing Unit (CPU), an Application Specific Integrated Circuit (ASIC), a Field-Programmable Gate Array (FPGA), or a Complex Programmable Logic Device (CPLD), and the processor may also use a multi-core architecture.

The processor invokes the program stored in the memory, and is configured to perform any one of the methods provided in the embodiments of the present disclosure according to the obtained executable instruction. The processor and the memory may also be physically separated.

Optionally, the processor is configured to read the computer program in the memory to further perform the following operations: receiving a first message from a network device, wherein the first message at least carries transmission path information corresponding to the terminal..

Optionally, the transmission path information includes one of the following:
a transmission path type; a transmission path type corresponding to a first bearer or a first logical channel; a transmission path type corresponding to a specific object; a transmission path type of a first bearer or a first logical channel corresponding to a specific object; a radio network temporary identifier (RNTI) type monitored by the terminal;
wherein the transmission path type includes: a Uu link or a sidelink;
the RNTI type includes an RNTI for scheduling a sidelink interface resource or an RNTI for scheduling a Uu interface resource;
the specific object includes one of the following: a target layer-2 address; a combination of a source layer-2 address and a target layer-2 address; a combination of a source layer-2 address, a target layer-2 address, and a transmission type.

Optionally, the processor is configured to read the computer program in the memory to perform at least one of the following operations:
when the transmission path information includes the transmission path type and the transmission path type is the sidelink, determining that the format of the MAC PDU is a MAC PDU format of a sidelink interface;
when the transmission path information includes the transmission path type and the transmission path type is the Uu link, determining that the format of the MAC PDU is a MAC PDU format of a Uu interface;
when the transmission path information includes the transmission path type corresponding to a first bearer or a first logical channel, then for a first bearer or a first logical channel using a sidelink, determining that the format of the MAC PDU is a MAC PDU format of a sidelink interface; for a first bearer or a first logical channel using a Uu link, determining that the format of the MAC PDU is a MAC PDU format of a Uu interface;
when the transmission path information includes the transmission path type corresponding to a specific object, then for a specific object using a sidelink, determining that the format of the MAC PDU is a MAC PDU format of a sidelink interface; and for a specific object using a Uu link, determining that the format of the MAC PDU is a MAC PDU format of a Uu interface.

Optionally, when the format of the MAC PDU is determined to be a MAC PDU format of a sidelink interface, the processor is configured to read the computer program in the memory to further perform the following operations:
when a logical channel of the terminal is a logical channel of a Uu interface, encapsulating according to the MAC PDU format of the Uu interface to obtain a first data packet;
adding a sidelink interface shared channel SL-SCH sub-header to a MAC PDU header of the first data packet;
wherein the SL-SCH sub-header includes second indication information of a source layer-2 address and a target layer-2 address corresponding to a sidelink interface.

Optionally, a manner of determining the source layer-2 address and the target layer-2 address includes:
receiving a second message from a network device, and determining the source layer-2 address and the target layer-2 address corresponding to the sidelink interface according to the second message, wherein the second message includes a source layer-2 address and a target layer-2 address corresponding to a sidelink interface;
   or
determining the source layer-2 address and the target layer-2 address corresponding to the sidelink interface based on implementation of the terminal.

Optionally, when the format of the MAC PDU is determined to be a MAC PDU format of a Uu interface, the processor is configured to read the computer program in the memory to further perform the following operations:
when the logical channel of the terminal is a sidelink interface logical channel, encapsulating according to the MAC PDU format of the sidelink interface to obtain a second data packet; and
carrying second indication information in an SL-SCH sub-header in a MAC PDU of the second data packet; or adding a MAC sub-PDU at a header or a tail of a MAC PDU of the second data packet, wherein the MAC sub-PDU includes a MAC sub-header or the MAC sub-PDU includes a MAC sub-header and a MAC control element (MAC CE), the MAC sub-header or the MAC CE carries second indication information;
the second indication information is used to indicate one of the following information: whether the network device needs to deliver data included in the MAC PDU to the core network, whether the network device directly forwards the data included in the MAC PDU in an air interface, the transmission path information corresponding to the data included in the MAC PDU, and air interface identification information of a peer terminal of the terminal on the Uu interface.

Optionally, the air interface identification information of the peer terminal at the Uu interface includes at least one of the following:
an RNTI of the peer terminal at the Uu interface; identification information of a network device and/or a cell to which the peer terminal belongs.

Optionally, the processor is configured to read a computer program in the memory to perform the following operations:
receiving the first message from the network device through first signaling; the first signaling includes at least one of the following: radio resource control RRC signaling, MAC signaling, and physical layer signaling.

Optionally, the processor is configured to read the computer program in the memory to perform at least one of the following operations:
when the transmission path information includes the transmission path type and the transmission path type is the sidelink, determining that the TB adopts a sidelink interface scrambling mode;
when the transmission path information includes the transmission path type and the transmission path type is the Uu link, determining that the TB adopts a Uu scrambling mode;
when the transmission path information includes the transmission path type corresponding to the first bearer or the first logical channel, determining that the TB adopts a sidelink interface scrambling mode, for the first bearer or the first logical channel using a sidelink; determining that the TB adopts a Uu scrambling mode, for the first bearer or the first logical channel using a Uu link;
when the transmission path information includes the transmission path type corresponding to a specific object, determining that the TB adopts a sidelink interface scrambling mode for a specific object using a sidelink; determining that the TB adopts a Uu scrambling mode, for a specific object using a Uu link.

It should be noted that the above-mentioned terminal provided in the embodiments of the present disclosure can implement all method steps implemented in the foregoing method embodiments, and can achieve the same technical effect, and details of the same parts and beneficial effects as those in the method embodiments in this embodiment are not described herein again.

An embodiment of the present disclosure further provides a computer-readable storage medium, on which a computer program is stored, wherein the computer program, when executed by a processor, implements the steps of the data transmission method applied to the terminal. The processor-readable storage medium may be any usable medium or data storage device accessible by the processor, including but not limited to a magnetic memory (for example, a floppy disk, a hard disk, a magnetic tape, a magneto-optical disk (MO), etc.), an optical memory (for example, a CD, a DVD, a BD, an HVD, etc.), and a semiconductor memory (for example, a ROM, an EPROM, an EEPROM, a non-volatile memory (NAND Flash), a solid state disk (SSD)), and the like.

As shown in FIG. 9, an embodiment of the present disclosure provides a data transmission apparatus 900 applied to a network device and the apparatus includes:
a first sending unit 901, configured to send a first message to a terminal, wherein the first message at least carries transmission path information corresponding to the terminal, and the transmission path information is used by the terminal to determine a format of a Media Access Control (MAC) Protocol Data Unit (PDU) of a MAC layer and/or a scrambling mode of a transmission block (TB).

Optionally, the transmission path information includes one of the following:
a transmission path type; a transmission path type corresponding to a first bearer or a first logical channel; a transmission path type corresponding to a specific object; a transmission path type corresponding to a first bearer or a first logical channel corresponding to a specific object; a radio network temporary identifier (RNTI) type monitored by the terminal;
wherein the transmission path type includes: a Uu link or a sidelink;
the RNTI type includes an RNTI for scheduling a sidelink interface resource or an RNTI for scheduling a Uu interface resource;
the specific object includes one of the following:
   a target layer-2 address; a combination of a source layer-2 address and a target layer-2 address; a combination of a source layer-2 address, a target layer-2 address, and a transmission type.

Optionally, the apparatus further includes:
a second sending unit, configured to send a second message to the terminal, wherein the second message includes a source layer-2 address and a target layer-2 address corresponding to the sidelink interface.

Optionally, the first sending unit 901 is configured to:
send the first message to the terminal through first signaling; the first signaling includes at least one of the following: radio resource control RRC signaling, MAC signaling, and physical layer signaling.

Optionally, the apparatus further includes:
a first determining unit, configured to receive a MAC PDU from the terminal, and determine, according to target information in the MAC PDU, a transmission mode corresponding to data included in the MAC PDU; or
a second determining unit, configured to receive a TB from the terminal, and determine a transmission mode corresponding to data included in the TB according to an RNTI used when the terminal scrambles the TB;
wherein the transmission mode includes: sending to a core network or forwarding to a peer terminal of the terminal through a Uu interface;
wherein the target information includes one of the following:
   first indication information of a source layer-2 address and a target layer-2 address corresponding to a sidelink interface and carried in a sidelink interface shared channel SL-SCH sub-header;
   second indication information carried in a MAC sub-PDU subheader or a MAC CE, wherein the second indication information is used to indicate one of following: whether the network device needs to deliver data included in the MAC PDU to a core network, whether the network device directly forwards data included in the MAC PDU in an air interface, the transmission path information corresponding to data included in the MAC PDU, and air interface identification information of a peer terminal of the terminal on the Uu interface.

It should be noted that the apparatus embodiment is an apparatus corresponding to the foregoing method embodiments, and all implementations in the foregoing method embodiments are applicable to the apparatus embodiment, and can also achieve the same technical effect.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solution may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

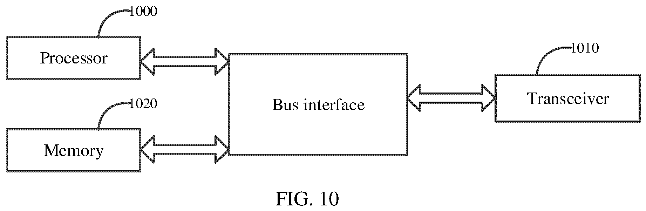

As shown in FIG. 10, an embodiment of the present disclosure further provides a network device, including a processor 1000, a transceiver 1010, a memory 1020, and a program stored on the memory 1020 and executable on the processor 1000, wherein the transceiver 1010 is connected to the processor 1000 and the memory 1020 through a bus interface, and the processor 1000 is configured to read a program in the memory to perform the following processes:
sending a first message to a terminal through a transceiver 1010, wherein the first message at least carries transmission path information corresponding to the terminal, and the transmission path information is used by the terminal to determine a format of a media access control MAC protocol data unit PDU and/or a scrambling mode of a transmission block TB.

The transceiver 1010 is configured to receive and send data under the control of the processor 1000.

In FIG. 10, the bus architecture may include any number of interconnected buses and bridges, and specifically, various circuits of one or more processors represented by the processor 1000 and a memory represented by the memory 1020 are linked together. The bus architecture may also link various other circuits, such as a peripheral device, a voltage regulator, and a power management circuit, which are well known in the art, and therefore are not further described herein. The bus interface provides an interface. The transceiver 1010 may be a plurality of elements, including a transmitter and a receiver, and provides units for communicating with various other apparatuses on a transmission medium, wherein the transmission mediums include transmission media such as a wireless channel, a wired channel, and an optical cable. For different user equipment, the user interface 1030 may also be an interface capable of being externally connected to a device needing to be internally connected, and the connected device includes but is not limited to a keypad, a display, a speaker, a microphone, a joystick, and the like.

The processor 1000 is responsible for managing the bus architecture and general processing, and the memory 1020 may store data used by the processor 1000 when performing operations.

Optionally, the processor 1000 may be a CPU, an ASIC, an FPGA, or a CPLD, and the processor may optionally use a multi-core architecture.

The processor invokes the computer program stored in the memory, and is configured to perform any one of the methods provided in the embodiments of the present disclosure according to the obtained executable instruction. The processor and the memory may also be physically separated.

Optionally, the transmission path information includes one of the following:
a transmission path type; a transmission path type corresponding to a first bearer or a first logical channel; a transmission path type corresponding to a specific object; a transmission path type corresponding to a first bearer or a first logical channel corresponding to a specific object; a radio network temporary identifier (RNTI) type monitored by the terminal;
wherein the transmission path type includes: a Uu link or a sidelink;
the RNTI type includes an RNTI for scheduling a sidelink interface resource or an RNTI for scheduling a Uu interface resource;
the specific object includes one of the following: a target layer-2 address; a combination of a source layer-2 address and a target layer-2 address; a combination of a source layer-2 address, a target layer-2 address, and a transmission type.

Optionally, the processor is configured to read the computer program in the memory to further perform the following operations: sending a second message to the terminal, wherein the second message includes a source layer-2 address and a target layer-2 address corresponding to the sidelink interface.

Optionally, the processor is configured to read a computer program in the memory to perform the following operations: sending the first message to the terminal through first signaling; the first signaling includes at least one of the following: radio resource control RRC signaling, MAC signaling, and physical layer signaling.

Optionally, the processor is configured to read the program in the memory to further perform at least one of the following operations:
receiving a MAC PDU from the terminal, and determining, according to target information in the MAC PDU, a transmission mode corresponding to data included in the MAC PDU; or
receiving a TB from the terminal, and determining a transmission mode corresponding to data included in the TB according to an RNTI used when the terminal scrambles the TB;
wherein the transmission mode includes: sending to a core network or forwarding to a peer terminal of the terminal through a Uu interface;
wherein the target information includes one of the following:
   first indication information of a source layer-2 address and a target layer-2 address corresponding to a sidelink interface and carried in a sidelink interface shared channel SL-SCH sub-header;
   second indication information carried in a MAC sub-PDU subheader or a MAC CE, wherein the second indication information is used to indicates one of following: whether the network device needs to deliver data included in the MAC PDU to a core network, whether the network device directly forwards data included in the MAC PDU in an air interface, the transmission path information corresponding to data included in the MAC PDU, and air interface identification information of a peer terminal of the terminal on the Uu interface.

It should be noted that the above-mentioned network device provided in the embodiments of the present disclosure can implement all method steps implemented in the foregoing method embodiments, and can achieve the same technical effect, and details of the same parts and beneficial effects as those in the method embodiments in this embodiment are not described herein again.

An embodiment of the present disclosure further provides a computer-readable storage medium, on which a computer program is stored, wherein the computer program, when executed by a processor, implements the steps of the data transmission method applied to the network device. The processor-readable storage medium may be any usable medium or data storage device accessible by a processor, including but not limited to a magnetic memory (for example, a floppy disk, a hard disk, a magnetic tape, a magneto-optical disk (DVD), a Blu-ray disk (CD), a Digital Versatile Disk (DVD), a Blu-ray Disk (BD), a High-Definition Versatile Disk (EPROM), an Electrically EPROM (EEPROM), a non-volatile memory (NAND Flash), a Solid State Disk (Solid State Disk or Solid State Drive, SSD), etc.).

A person skilled in the art should understand that the embodiments of the present disclosure may be provided as a method, a system, or a computer program product. Therefore, the present disclosure may take the form of an entire hardware embodiment, an entire software embodiment, or an embodiment combining software and hardware aspects. Moreover, the present disclosure may use a form of a computer program product implemented on one or more computer-usable storage media (including but not limited to a disk memory, an optical memory, and the like) including computer-usable program codes.

The present disclosure is described with reference to the flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general-purpose computer, a special-purpose computer, an embedded processor, or other programmable data processing devices to generate a machine, so that the instructions executed by the processor of the computer or other programmable data processing devices generate means for implementing the functions specified in one or more flows of the flowcharts and/or one or more blocks in the block diagrams.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

It should be noted that it should be understood that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, the determining module may be a separately established processing element, or may be integrated in a chip of the foregoing apparatus, or may be stored in a memory of the apparatus in a form of program code, and a certain processing element of the apparatus invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software]

For example, each module, unit, subunit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling program code by using a processing element, the processing element may be a general-purpose processor, for example, a central processing unit (Central Processing Unit, CPU), or another processor that can invoke the program code. For another example, these modules may be integrated together and implemented in a form of a system-on-a-chip (SOC).

In the specification and claims of the present disclosure, the terms "first", "second", and the like are intended to distinguish between similar objects, and are not necessarily used to describe a specific order or sequence. It should be understood that the data used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C, representing the presence of A, B alone, C alone, and both A and B, both B and C exist, both A and C exist, and A, B and C both exist. Similarly, use of "at least one of A and B" in this specification and claims should be understood as "A alone, B alone, or both A and B".

Evidently those skilled in the art can make various modifications and variations to the disclosure without departing from the spirit and scope of the disclosure. In this way, when these modifications and variations of the present disclosure fall within the scope of the claims of the present disclosure and their equivalent technologies, the present disclosure is also intended to include these modifications and variations.

## Claims

1. A data transmission method performed by a terminal, the method comprising:
determining transmission path information;
determining a format of a Media Access Control (MAC) Protocol Data Unit (PDU) of a MAC layer and/or a scrambling mode of a Transmission Block (TB) according to the transmission path information.

2. The method according to claim 1, further comprising:
receiving a first message from a network device, wherein the first message at least carries transmission path information corresponding to the terminal.

3. The method according to claim 1 or 2, wherein the transmission path information comprises one of the following:
a transmission path type;
a transmission path type corresponding to a first bearer or a first logical channel;
a transmission path type corresponding to a specific object;
a transmission path type of a first bearer or a first logical channel corresponding to a specific object;
a radio network temporary identifier (RNTI) type monitored by the terminal;
wherein the transmission path type comprises: a Uu link or a sidelink;
the RNTI type comprises an RNTI for scheduling a sidelink interface resource or an RNTI for scheduling a Uu interface resource;
the specific object comprises one of the following:
a target layer-2 address;
a combination of a source layer-2 address and a target layer-2 address;
a combination of a source layer-2 address, a target layer-2 address, and a transmission type.

4. The method according to claim 1, wherein determining the format of the MAC PDU of the MAC layer according to the transmission path information comprises at least one of the following:
when the transmission path information comprises the transmission path type and the transmission path type is the sidelink, determining that the format of the MAC PDU is a MAC PDU format of a sidelink interface;
when the transmission path information comprises the transmission path type and the transmission path type is the Uu link, determining that the format of the MAC PDU is a MAC PDU format of a Uu interface;
when the transmission path information comprises the transmission path type corresponding to a first bearer or a first logical channel, then for a first bearer or a first logical channel using a sidelink, determining that the format of the MAC PDU is a MAC PDU format of a sidelink interface; for a first bearer or a first logical channel using a Uu link, determining that the format of the MAC PDU is a MAC PDU format of a Uu interface;
when the transmission path information comprises the transmission path type corresponding to a specific object, then for a specific object using a sidelink, determining that the format of the MAC PDU is a MAC PDU format of a sidelink interface; and for a specific object using a Uu link, determining that the format of the MAC PDU is a MAC PDU format of a Uu interface.

5. The method according to claim 4, wherein when the format of the MAC PDU is determined to be the MAC PDU format of a sidelink interface, the method further comprises:
when a logical channel of the terminal is a logical channel of a Uu interface, encapsulating according to the MAC PDU format of the Uu interface to obtain a first data packet;
adding a sidelink interface shared channel SL-SCH sub-header to a MAC PDU header of the first data packet;
wherein the SL-SCH sub-header comprises first indication information of a source layer-2 address and a target layer-2 address corresponding to a sidelink interface.

6. The method according to claim 5, wherein determining the source layer-2 address and the target layer-2 address comprises:
receiving a second message from a network device, and determining the source layer-2 address and the target layer-2 address corresponding to the sidelink interface according to the second message, wherein the second message comprises a source layer-2 address and a target layer-2 address corresponding to a sidelink interface;
or
determining the source layer-2 address and the target layer-2 address corresponding to the sidelink interface based on implementation of the terminal.

7. The method according to claim 4, wherein when the format of the MAC PDU is determined to be a MAC PDU format of a Uu interface, the method further comprises:
when the logical channel of the terminal is a sidelink interface logical channel, encapsulating according to the MAC PDU format of the sidelink interface to obtain a second data packet; and
carrying second indication information in an SL-SCH sub-header in a MAC PDU of the second data packet; or adding a MAC sub-PDU at a header or a tail of a MAC PDU of the second data packet, wherein the MAC sub-PDU comprises a MAC sub-header or the MAC sub-PDU comprises a MAC sub-header and a MAC control element (MAC CE), the MAC sub-header or the MAC CE carries second indication information;
the second indication information is used to indicate one of the following information: whether the network device needs to deliver data comprised in the MAC PDU to the core network, whether the network device directly forwards the data comprised in the MAC PDU in an air interface, the transmission path information corresponding to the data comprised in the MAC PDU, and air interface identification information of a peer terminal of the terminal on the Uu interface.

8. The method according to claim 7, wherein the air interface identification information of the peer terminal at the Uu interface comprises at least one of the following:
an RNTI of the peer terminal at the Uu interface;
identification information of a network device and/or a cell to which the peer terminal belongs.

9. The method according to claim 2, wherein the receiving a first message from a network device comprises:
receiving the first message from the network device through first signaling;
the first signaling comprises at least one of the following: radio resource control RRC signaling, MAC signaling, and physical layer signaling.

10. The method according to claim 1, wherein the determining the scrambling mode of the transmission block TB according to the transmission path information comprises at least one of the following:
when the transmission path information comprises the transmission path type and the transmission path type is the sidelink, determining that the TB adopts a sidelink interface scrambling mode;
when the transmission path information comprises the transmission path type and the transmission path type is the Uu link, determining that the TB adopts a Uu scrambling mode;
when the transmission path information comprises the transmission path type corresponding to the first bearer or the first logical channel, determining that the TB adopts a sidelink interface scrambling mode, for the first bearer or the first logical channel using a sidelink; determining that the TB adopts a Uu scrambling mode, for the first bearer or the first logical channel using a Uu link;
when the transmission path information comprises the transmission path type corresponding to a specific object, determining that the TB adopts a sidelink interface scrambling mode for a specific object using a sidelink; determining that the TB adopts a Uu scrambling mode, for a specific object using a Uu link.

11. A data transmission method performed by a network device, the method comprising:
sending a first message to a terminal, wherein the first message at least carries transmission path information corresponding to the terminal, and the transmission path information is used by the terminal to determine a format of a Media Access Control (MAC) Protocol Data Unit (PDU) of a MAC layer and/or a scrambling mode of a transmission block (TB).

12. The method according to claim 11, wherein the transmission path information comprises one of the following:
a transmission path type;
a transmission path type corresponding to a first bearer or a first logical channel;
a transmission path type corresponding to a specific object;
a transmission path type corresponding to a first bearer or a first logical channel corresponding to a specific object;
a radio network temporary identifier (RNTI) type monitored by the terminal;
wherein the transmission path type comprises: a Uu link or a sidelink;
the RNTI type comprises an RNTI for scheduling a sidelink interface resource or an RNTI for scheduling a Uu interface resource;
the specific object comprises one of the following:
a target layer-2 address;
a combination of a source layer-2 address and a target layer-2 address;
a combination of a source layer-2 address, a target layer-2 address, and a transmission type.

13. The method according to claim 11, further comprising:
sending a second message to the terminal, wherein the second message comprises a source layer-2 address and a target layer-2 address corresponding to the sidelink interface.

14. The method according to claim 11, wherein the sending a first message to a terminal comprises:
sending the first message to the terminal through first signaling;
the first signaling comprises at least one of the following: radio resource control RRC signaling, MAC signaling, and physical layer signaling.

15. The method according to claim 11, further comprising:
receiving a MAC PDU from the terminal, and determining, according to target information in the MAC PDU, a transmission mode corresponding to data comprised in the MAC PDU; or
receiving a TB from the terminal, and determining a transmission mode corresponding to data comprised in the TB according to an RNTI used when the terminal scrambles the TB;
wherein the transmission mode comprises: sending to a core network or forwarding to a peer terminal of the terminal through a Uu interface;
wherein the target information comprises one of the following:
first indication information of a source layer-2 address and a target layer-2 address corresponding to a sidelink interface and carried in a sidelink interface shared channel SL-SCH sub-header;
second indication information carried in a MAC sub-PDU subheader or a MAC CE, whether the network device needs to deliver data comprised in the MAC PDU to a core network, whether the network device directly forwards data comprised in the MAC PDU in an air interface, the transmission path information corresponding to data comprised in the MAC PDU, and air interface identification information of a peer terminal of the terminal on the Uu interface.

16. A terminal, comprising a memory, a transceiver, and a processor,
wherein the memory is configured to store a computer program; the transceiver is configured to send and receive data under the control of the processor; and the processor is configured to read the computer program in the memory and perform the following operations:
determining transmission path information;
determining a format of a Media Access Control (MAC) Protocol Data Unit (PDU) of a MAC layer and/or a scrambling mode of a Transmission Block (TB) according to the transmission path information..

17. The terminal according to claim 16, wherein the processor is configured to read the computer program in the memory to further perform the following operations:
receiving a first message from a network device, wherein the first message at least carries transmission path information corresponding to the terminal.

18. The terminal according to claim 16 or 17, wherein the transmission path information comprises one of the following:
a transmission path type;
a transmission path type corresponding to a first bearer or a first logical channel;
a transmission path type corresponding to a specific object;
a transmission path type of a first bearer or a first logical channel corresponding to a specific object;
a radio network temporary identifier (RNTI) type monitored by the terminal;
wherein the transmission path type comprises: a Uu link or a sidelink;
the RNTI type comprises an RNTI for scheduling a sidelink interface resource or an RNTI for scheduling a Uu interface resource;
the specific object comprises one of the following:
a target layer-2 address;
a combination of a source layer-2 address and a target layer-2 address;
a combination of a source layer-2 address, a target layer-2 address, and a transmission type.

19. The terminal according to claim 16, wherein the processor is configured to read the computer program in the memory to perform at least one of the following operations:
when the transmission path information comprises the transmission path type and the transmission path type is the sidelink, determining that the format of the MAC PDU is a MAC PDU format of a sidelink interface;
when the transmission path information comprises the transmission path type and the transmission path type is the Uu link, determining that the format of the MAC PDU is a MAC PDU format of a Uu interface;
when the transmission path information comprises the transmission path type corresponding to a first bearer or a first logical channel, then for a first bearer or a first logical channel using a sidelink, determining that the format of the MAC PDU is a MAC PDU format of a sidelink interface; for a first bearer or a first logical channel using a Uu link, determining that the format of the MAC PDU is a MAC PDU format of a Uu interface;
when the transmission path information comprises the transmission path type corresponding to a specific object, then for a specific object using a sidelink, determining that the format of the MAC PDU is a MAC PDU format of a sidelink interface; and for a specific object using a Uu link, determining that the format of the MAC PDU is a MAC PDU format of a Uu interface.

20. The terminal according to claim 19, wherein when the format of the MAC PDU is determined to be the MAC PDU format of the sidelink interface, the processor is configured to read the computer program in the memory to further perform the following operations:
when a logical channel of the terminal is a logical channel of the Uu interface, encapsulating according to the MAC PDU format of the Uu interface to obtain a first data packet;
adding a sidelink interface shared channel SL-SCH sub-header to a MAC PDU header of the first data packet;
wherein the SL-SCH sub-header comprises first indication information of a source layer-2 address and a target layer-2 address corresponding to a sidelink interface.

21. The terminal according to claim 20, wherein determining the source layer-2 address and the target layer-2 address comprises:
receiving a second message from a network device, and determining the source layer-2 address and the target layer-2 address corresponding to the sidelink interface according to the second message, wherein the second message comprises a source layer-2 address and a target layer-2 address corresponding to a sidelink interface;
or
determining the source layer-2 address and the target layer-2 address corresponding to the sidelink interface based on implementation of the terminal.

22. The terminal according to claim 19, wherein when the format of the MAC PDU is determined to be a MAC PDU format of the Uu interface, the processor is configured to read the computer program in the memory to further perform the following operations:
when the logical channel of the terminal is a sidelink interface logical channel, encapsulating according to the MAC PDU format of the sidelink interface to obtain a second data packet;
carrying second indication information in an SL-SCH sub-header in a MAC PDU of the second data packet; or adding a MAC sub-PDU at a header or a tail of a MAC PDU of the second data packet, wherein the MAC sub-PDU comprises a MAC sub-header or the MAC sub-PDU comprises a MAC sub-header and a MAC control element (MAC CE), the MAC sub-header or the MAC CE carries second indication information;
the second indication information is used to indicate one of the following information: whether the network device needs to deliver data comprised in the MAC PDU to the core network, whether the network device directly forwards the data comprised in the MAC PDU in an air interface, the transmission path information corresponding to the data comprised in the MAC PDU, and air interface identification information of a peer terminal of the terminal on the Uu interface.

23. The terminal according to claim 22, wherein the air interface identification information of the peer terminal at the Uu interface comprises at least one of the following:
an RNTI of the peer terminal at the Uu interface;
identification information of a network device and/or a cell to which the peer terminal belongs.

24. The terminal according to claim 17, wherein the processor is configured to read the computer program in the memory to perform the following operations:
receiving the first message from the network device through first signaling;
wherein the first signaling comprises at least one of the following: radio resource control RRC signaling, MAC signaling, and physical layer signaling.

25. The terminal according to claim 16, wherein the processor is configured to read the computer program in the memory to perform at least one of the following operations:
when the transmission path information comprises the transmission path type and the transmission path type is the sidelink, determining that the TB adopts a sidelink interface scrambling mode;
when the transmission path information comprises the transmission path type and the transmission path type is the Uu link, determining that the TB adopts a Uu scrambling mode;
when the transmission path information comprises the transmission path type corresponding to the first bearer or the first logical channel, determining that the TB adopts a sidelink interface scrambling mode, for the first bearer or the first logical channel using a sidelink; determining that the TB adopts a Uu scrambling mode, for the first bearer or the first logical channel using a Uu link;
when the transmission path information comprises the transmission path type corresponding to a specific object, determining that the TB adopts a sidelink interface scrambling mode for a specific object using a sidelink; determining that the TB adopts a Uu scrambling mode, for a specific object using a Uu link.

26. A network device, comprising a memory, a transceiver, and a processor, wherein the memory is configured to store a computer program; the transceiver is configured to send and receive data under the control of the processor; and the processor is configured to read the computer program in the memory and perform the following operations:
sending a first message to a terminal, wherein the first message at least carries transmission path information corresponding to the terminal, and the transmission path information is used by the terminal to determine a format of a Media Access Control (MAC) Protocol Data Unit (PDU) of a MAC layer and/or a scrambling mode of a transmission block (TB).

27. The network device according to claim 26, wherein the transmission path information comprises one of the following:
a transmission path type;
a transmission path type corresponding to a first bearer or a first logical channel;
a transmission path type corresponding to a specific object;
a transmission path type corresponding to a first bearer or a first logical channel corresponding to a specific object;
a radio network temporary identifier (RNTI) type monitored by the terminal;
wherein the transmission path type comprises: a Uu link or a sidelink;
the RNTI type comprises an RNTI for scheduling a sidelink interface resource or an RNTI for scheduling a Uu interface resource;
the specific object comprises one of the following:
a target layer-2 address;
a combination of a source layer-2 address and a target layer-2 address;
a combination of a source layer-2 address, a target layer-2 address, and a transmission type.

28. The network device according to claim 26, wherein the processor is configured to read the computer program in the memory to further perform the following operations:
sending a second message to the terminal, wherein the second message comprises a source layer-2 address and a target layer-2 address corresponding to the sidelink interface.

29. The network device according to claim 26, wherein the processor is configured to read the computer program in the memory to perform the following operations:
sending the first message to the terminal through first signaling;
the first signaling comprises at least one of the following: radio resource control RRC signaling, MAC signaling, and physical layer signaling.

30. The network device according to claim 26, wherein the processor is configured to read the computer program in the memory to further perform the following operations:
receiving a MAC PDU from the terminal, and determining, according to target information in the MAC PDU, a transmission mode corresponding to data comprised in the MAC PDU; or
receiving a TB from the terminal, and determining a transmission mode corresponding to data comprised in the TB according to an RNTI used when the terminal scrambles the TB;
wherein the transmission mode comprises: sending to a core network or forwarding to a peer terminal of the terminal through a Uu interface;
wherein the target information comprises one of the following:
first indication information of a source layer-2 address and a target layer-2 address corresponding to a sidelink interface and carried in a sidelink interface shared channel SL-SCH sub-header;
second indication information carried in a MAC sub-PDU subheader or a MAC CE, wherein the second indication information is used to indicate whether the network device needs to deliver data comprised in the MAC PDU to a core network, whether the network device directly forwards data comprised in the MAC PDU in an air interface, the transmission path information corresponding to data comprised in the MAC PDU, and air interface identification information of a peer terminal of the terminal on the Uu interface.

31. A data transmission apparatus applied to a terminal, the apparatus comprising:
a first determining unit, configured to determine transmission path information;
a second determining unit, configured to determine a format of a Media Access Control (MAC) Protocol Data Unit (PDU) of a MAC layer and/or a scrambling mode of a Transmission Block (TB) according to the transmission path information.

32. The apparatus according to claim 31, further comprising:
a first receiving unit, configured to receive a first message from a network device, wherein the first message at least carries transmission path information corresponding to the terminal.

33. The apparatus according to claim 31 or 32, wherein the transmission path information comprises one of the following:
a transmission path type;
a transmission path type corresponding to a first bearer or a first logical channel;
a transmission path type corresponding to a specific object;
a transmission path type of a first bearer or a first logical channel corresponding to a specific object;
a radio network temporary identifier (RNTI) type monitored by the terminal;
wherein the transmission path type comprises: a Uu link or a sidelink;
the RNTI type comprises an RNTI for scheduling a sidelink interface resource or an RNTI for scheduling a Uu interface resource;
the specific object comprises one of the following:
a target layer-2 address;
a combination of a source layer-2 address and a target layer-2 address;
a combination of a source layer-2 address, a target layer-2 address, and a transmission type.

34. The apparatus according to claim 31, wherein the second determining unit is configured to implement at least one of the following:
when the transmission path information comprises the transmission path type and the transmission path type is the sidelink, determining that the format of the MAC PDU is a MAC PDU format of a sidelink interface;
when the transmission path information comprises the transmission path type and the transmission path type is the Uu link, determining that the format of the MAC PDU is a MAC PDU format of a Uu interface;
when the transmission path information comprises the transmission path type corresponding to a first bearer or a first logical channel, then for a first bearer or a first logical channel using a sidelink, determining that the format of the MAC PDU is a MAC PDU format of a sidelink interface; for a first bearer or a first logical channel using a Uu link, determining that the format of the MAC PDU is a MAC PDU format of a Uu interface;
when the transmission path information comprises the transmission path type corresponding to a specific object, then for a specific object using a sidelink, determining that the format of the MAC PDU is a MAC PDU format of a sidelink interface; and for a specific object using a Uu link, determining that the format of the MAC PDU is a MAC PDU format of a Uu interface.

35. The apparatus according to claim 34, wherein when the format of the MAC PDU is determined to be the MAC PDU format of a sidelink interface, the apparatus further comprises:
a first obtaining unit, configured to: when a logical channel of the terminal is a logical channel of a Uu interface, encapsulate according to the MAC PDU format of the Uu interface to obtain a first data packet;
a first processing unit, configured to add a sidelink interface shared channel SL-SCH sub-header to a MAC PDU header of the first data packet;
wherein the SL-SCH sub-header comprises first indication information of a source layer-2 address and a target layer-2 address corresponding to a sidelink interface.

36. The apparatus according to claim 35, wherein determining the source layer-2 address and the target layer-2 address comprises:
receiving a second message from a network device, and determining the source layer-2 address and the target layer-2 address corresponding to the sidelink interface according to the second message, wherein the second message comprises a source layer-2 address and a target layer-2 address corresponding to a sidelink interface;
or
determining the source layer-2 address and the target layer-2 address corresponding to the sidelink interface based on implementation of the terminal.

37. The apparatus according to claim 34, wherein when the format of the MAC PDU is determined to be a MAC PDU format of a Uu interface, the apparatus further comprises:
a second obtaining unit, configured to: when the logical channel of the terminal is a sidelink interface logical channel, encapsulate according to the MAC PDU format of the sidelink interface to obtain a second data packet;
a second processing unit, configured to carry second indication information in an SL-SCH sub-header in a MAC PDU of the second data packet; or add a MAC sub-PDU at a header or a tail of a MAC PDU of the second data packet, wherein the MAC sub-PDU comprises a MAC sub-header or the MAC sub-PDU comprises a MAC sub-header and a MAC control element (MAC CE), the MAC sub-header or the MAC CE carries second indication information;
the second indication information is used to indicate one of the following information: whether the network device needs to deliver data comprised in the MAC PDU to the core network, whether the network device directly forwards the data comprised in the MAC PDU in an air interface, the transmission path information corresponding to the data comprised in the MAC PDU, and air interface identification information of a peer terminal of the terminal on the Uu interface.

38. The apparatus according to claim 37, wherein the air interface identification information of the peer terminal at the Uu interface comprises at least one of the following:
an RNTI of the peer terminal at the Uu interface;
identification information of a network device and/or a cell to which the peer terminal belongs.

39. The apparatus according to claim 32, wherein the first receiving unit is configured to:
receive the first message from the network device through first signaling;
the first signaling comprises at least one of the following: radio resource control RRC signaling, MAC signaling, and physical layer signaling.

40. The apparatus according to claim 31, wherein the second determining unit is configured to implement at least one of the following:
when the transmission path information comprises the transmission path type and the transmission path type is the sidelink, determining that the TB adopts a sidelink interface scrambling mode;
when the transmission path information comprises the transmission path type and the transmission path type is the Uu link, determining that the TB adopts a Uu scrambling mode;
when the transmission path information comprises the transmission path type corresponding to the first bearer or the first logical channel, determining that the TB adopts a sidelink interface scrambling mode, for the first bearer or the first logical channel using a sidelink; determining that the TB adopts a Uu scrambling mode, for the first bearer or the first logical channel using a Uu link;
when the transmission path information comprises the transmission path type corresponding to a specific object, determining that the TB adopts a sidelink interface scrambling mode for a specific object using a sidelink; determining that the TB adopts a Uu scrambling mode, for a specific object using a Uu link.

41. A data transmission apparatus applied to a network device, the apparatus comprising:
a first sending unit, configured to send a first message to a terminal, wherein the first message at least carries transmission path information corresponding to the terminal, and the transmission path information is used by the terminal to determine a format of a Media Access Control (MAC) Protocol Data Unit (PDU) of a MAC layer and/or a scrambling mode of a transmission block (TB).

42. The apparatus according to claim 41, wherein the transmission path information comprises one of the following:
a transmission path type;
a transmission path type corresponding to a first bearer or a first logical channel;
a transmission path type corresponding to a specific object;
a transmission path type corresponding to a first bearer or a first logical channel corresponding to a specific object;
a radio network temporary identifier (RNTI) type monitored by the terminal;
wherein the transmission path type comprises: a Uu link or a sidelink;
the RNTI type comprises an RNTI for scheduling a sidelink interface resource or an RNTI for scheduling a Uu interface resource;
the specific object comprises one of the following:
a target layer-2 address;
a combination of a source layer-2 address and a target layer-2 address;
a combination of a source layer-2 address, a target layer-2 address, and a transmission type.

43. The apparatus according to claim 41, further comprising:
a second sending unit, configured to send a second message to the terminal, wherein the second message comprises a source layer-2 address and a target layer-2 address corresponding to the sidelink interface.

44. The apparatus according to claim 41, wherein the first sending unit is configured to:
send the first message to the terminal through first signaling;
the first signaling comprises at least one of the following: radio resource control RRC signaling, MAC signaling, and physical layer signalingg.

45. The apparatus according to claim 41, further comprising:
a first determining unit, configured to receive a MAC PDU from the terminal, and determine, according to target information in the MAC PDU, a transmission mode corresponding to data comprised in the MAC PDU; or
a second determining unit, configured to receive a TB from the terminal, and determine a transmission mode corresponding to data comprised in the TB according to an RNTI used when the terminal scrambles the TB;
wherein the transmission mode comprises: sending to a core network or forwarding to a peer terminal of the terminal through a Uu interface;
wherein the target information comprises one of the following:
first indication information of a source layer-2 address and a target layer-2 address corresponding to a sidelink interface and carried in a sidelink interface shared channel SL-SCH sub-header;
second indication information carried in a MAC sub-PDU subheader or a MAC CE, wherein the second indication information is used to indicate one of following: whether the network device needs to deliver data comprised in the MAC PDU to a core network, whether the network device directly forwards data comprised in the MAC PDU in an air interface, the transmission path information corresponding to data comprised in the MAC PDU, and air interface identification information of a peer terminal of the terminal on the Uu interface.

46. A processor-readable storage medium, wherein the processor-readable storage medium stores a computer program, and the computer program is configured to cause a processor to perform the method according to any one of claims 1 to 15.
